# EUROPEAN PATENT APPLICATION

(11) **EP 4 269 093 A1**
(43) Date of publication of application: **01.11.2023**
(21) Application number: 23168362.4
(22) Date of filing: 18.04.2023
(51) Int. Cl.: B32B 21/04, B32B 7/03, B32B 7/12, B32B 21/13, B27D 1/04, B27K 3/34, B27K 3/50, B32B 21/14, C09D 193/04

(54) **AN ARTICLE COMPRISING LAMINATED WOOD AND A METHOD FOR TREATING LAMINATED WOOD**

(30) Priority: 20.04.2022 FI 20225331
(71) Applicant: UPM Plywood Oy, 15140 Lahti (FI)
(72) Inventor: Koski, Anna, 00100 Helsinki (FI); Härkönen, Riku, 00100 Helsinki (FI)
(74) Representative: Berggren Oy

(57) **Abstract**

An article (290) comprising laminated wood (210, 220). The laminated wood (210, 220) comprises a first veneer layer (110) that forms a first surface (221) of the article (290), a second layer, and adhesive (190) between the veneer layers. The first veneer layer (110) is formed of softwood. The article (290) comprises on the first surface (221) first hydrophobization agent (310), second hydrophobization agent (320), and mordant (330). The first hydrophobization agent (310) is alkene ketene dimer (AKD). The mordant (330) comprises aluminium. The second hydrophobization agent (320) is a rosin that is derivable from softwood or soft wood derivative or a derivative of such a rosin, wherein the rosin or the rosin derivative may be at least partly polymerized. A method for manufacturing the same.

## Description

### Technical field

The invention relates to hydrophobic wooden articles. The invention relates to methods for treating wood to be hydrophobic. The invention relates to hydrophobic wood laminates, such as plywood. The invention relates to methods for treating wood laminate, such as plywood, to be hydrophobic.

### Background

Plywood panels are commonly used e.g. in flooring, shelves, and wall structures. To improve the moisture resistance (i.e. to increase hydrophobicity), plywood panels may be hydrophobized using suitable hydrophobization agent. Hydrophobization may be used e.g. in panels intended for concrete forming. Alkyl ketene dimer (AKD) is one of many such agents, as known from the publication WO2014/114850. Other hydrophobization agents include other waxes and oils.

AKD and other waxes are attractive as hydrophobization agents, because they typically result in a very high water repellence (e.g. a contact angle) on wood. Moreover, waxes can be used in a form of an emulsion or a dispersion whereby, when applied a proper amount, the treated surface is discontinuous. Thus, only a part of the surface comprises the hydrophobization agent, while other parts form passages for the humidity to penetrate the surface, whereby the treated wooden surface remains breathable.

In concrete forming, the panel is removed from the concrete that is formed. Therefore, it is beneficial that the hydrophobized surface does not stick to the concrete. In fact, the AKD, which serves for the purpose of hyrophobizing the plywood, also serves as a release agent for the concrete, thereby forming a slippery surface from which the concrete can be easily released.

However, in various other constructional applications a slippery surface causes many problems. For example, if used as flooring or roofing, a slippery surface increases the risk of falling. Even if not used as flooring, gripping a slippery panel is hard, which poses risk for assembling the panels since the panel may drop from the hands of the constructor. This problem is more severe with panels having a moist surface than with dry panels. Moreover, as the purpose of the hydrophobization is to enable use of the panel in a wet or humid environment, the surfaces of the panels often are, in use, moist.

In the field of coated plywood panels, it is known to apply friction-increasing patterns to the surface. However, typically, a sufficient level of water repellence can be obtained by a negligibly thin layer of hydrophobization agent, whereby patterning is not practical. Moreover, patterning with e.g. a wax does not increase friction sufficiently.

### Summary

It has now been found that by using also a resin as a hydrophobization agent results in a higher friction of the treated wooden surface. An invention related to treatment of wood is disclosed in more specific terms in the appended examples. The invention is disclosed in more specific terms in the appended independent claims. Dependent claims, numbered examples, description and figures illustrate embodiments, some of which are preferable.

### Brief description of the drawings

- Fig. 1a: shows a piece of wood having a first surface and a second surface, the piece of wood being a wooden article,
- Fig. 1b: shows a plywood panel, which is an example of wood laminate, the plywood panel comprising wood veneer layers,
- Fig. 1c: shows a wood laminate comprising wood veneer layers,
- Fig. 1d: shows a wood laminate comprising a core in between two wood veneer layers,
- Fig. 1e: shows a wood laminate comprising a plywood panel attached to a board,
- Fig. 1f: shows a wood laminate comprising a veneer layer and a board,
- Fig. 2a: shows applying first hydrophobization agent and second hydrophobization agent onto a first surface of wood in the form of a treatment agent, wherein the wood may be part of wood laminate, such as plywood,
- Fig. 2b: shows applying first hydrophobization agent, second hydrophobization agent, and mordant onto a first surface of wood in the form of a treatment agent, wherein the wood may be part of wood laminate, such as plywood,
- Fig. 2c: shows applying the first hydrophobization agent in the form of a first treatment agent onto the first surface and applying the second hydrophobization agent in the form of a second treatment agent onto the first surface,
- Fig. 2d: shows applying the first hydrophobization agent in the form of a first treatment agent onto the first surface, applying the second hydrophobization agent in the form of a second treatment agent onto the first surface, and applying a mordant in the form of a third treatment agent onto the first surface,
- Fig. 2e: shows applying the first hydrophobization agent in the form of a first treatment agent onto the first surface and applying both the second hydrophobization agent and the mordant in the form of a fourth treatment agent onto the first surface,
- Fig. 3a: shows applying the first hydrophobization agent and the second hydrophobization agent (and optionally the mordant) onto the first surface in the form of a treatment agent and applying the treatment agent onto an opposite second surface simultaneously,
- Fig. 3b: shows applying the first hydrophobization agent and the second hydrophobization agent (and optionally the mordant) onto a second surface of the wood or the wood laminate or the wooden article or the plywood in the form of a treatment agent and there-after applying the treatment agent onto the first surface, which is opposite the second surface,
- Fig. 4a: shows various surfaces of a wood laminate, each one of which may be the first surface that is hydrophobized,
- Fig. 4b: shows a first surface and a third surface of a wooden object with right angles,
- Fig. 4c: shows a first surface and a third surface of a wooden object,
- Fig. 5a: shows schematically peeling a log using a lathe to form a veneer web,
- Fig. 5b: shows schematically cutting the veneer web to form veneers,
- Fig. 6a: shows, in a side view, plywood and grain directions of the veneer layers,
- Fig. 6b: shows, in an exploded perspective view, plywood of Fig. 6a and grain directions of the veneer layers,
- Fig. 6c: shows the central veneer layer of Fig. 6a in more detail,
- Fig. 6d: shows a veneer of the central veneer layer of Fig. 6c,
- Fig. 6e: shows an angle between grain directions of two adjacent veneer layers,
- Fig. 7a: shows applying the first hydrophobization agent and the second hydrophobization agent (and optionally the mordant) onto the first surface in the form of a treatment agent thereby forming an article without drying the article, and
- Fig. 7b: shows applying the first hydrophobization agent and the second hydrophobization agent (and optionally the mordant) onto the first surface in the form of a treatment agent thereby forming an article and thereafter drying the article.

### Detailed description

As detailed in the background, it is well known to make wood more hydrophobic by treating at least a surface thereof using a hydrophobization agent comprising an oil or wax. Hereinabove and below the term "wax" includes also waxy solids, i.e. wax-like solid materials. However, such a treatment makes the treated surface slippery, which poses problems for using and/or handling the wood or an article comprising the treated wood.

The inventors have found that by adding also resin as another hydrophobization agent the friction of the treated surface can be significantly increased. However, the inventors have also found that using also oil, wax, or wax-like solid improves the water repellence of the treated surface compared to a treatment with only resin. Results are given below in the section "Experimental".

Following these principles, a method for treating wood comprises applying first hydrophobization agent 310 and second hydrophobization agent 320 onto a first surface 221 of the wood 200. The first hydrophobization agent 310 is a wax, a wax-like solid, an oil, or a combination thereof. Thus, the first hydrophobization agent 310 may be a wax or a combination of at least two waxes. The first hydrophobization agent 310 may be an oil or a combination of at least two oils. The first hydrophobization agent 310 may be a combination of an oil and a wax. The first hydrophobization agent 310 may be a combination of an oil and at least two waxes; or a combination of a wax and at least oils; or a combination of at least two waxes and at least two oils. As indicated hereinabove, the "wax" refers also to a wax-like solid. The second hydrophobization agent 320 is a resin or a derivative of a resin. These terms will be specified below.

Because the resin or resin derivative is responsible for improving friction, it should be bound well to the wooden surface. Without being bound to a theory, the cellulose of the wood may be anionic, whereby cationic substances seem to bind more strongly to wood than anionic substances.

In general, a resin may be anionic or cationic. However, it has been found that binding of the resin (or a derivative thereof) to wood may be improved using a mordant 330. Firstly, the mordant 330 bounds strongly to the wood 200. Secondly, the resin or the resin derivative binds well to the mordant 330. Thus, the mordant becomes bound, on one hand, to the wood 200 and on the other hand, to the second hydrophobization agent 320. Therefore, an embodiment of the method comprises applying also a mordant 330 onto the first surface 221 of the wood 200.

Thus, the mordant 330 helps to bond resin (e.g. rosin) onto the wood fibres. The mordant, if used, should be present on the surfaces so that it can react with resin/rosin molecules. This reaction can be improved by heating/drying as detailed below. When temperature rises, a dispersion which contains the resin/rosin becomes destabilized, releasing the resin/rosin. Dispersed particles melt or sinter and spread out on the surface, where they come into contact with mordant. Reaction that bonds the resin/rosin occurs and hydrophobic surface is formed. The dispersion of the resin/rosin may destabilize without heating already during application of the second hydrophobization agent 320 e.g. by spraying. Typically a resin/rosin as such is not very reactive with wood. However, in sufficiently high temperature and time, the carboxyl groups of resin/rosin can form ester bonds with the hydroxyl groups on wood surface, whereby the mordant 330 is not always needed.

Naturally, the first and second hydrophobization agents 310, 320, and optionally the mordant 330, need not be applied as such, but they may be applied as part of the same or different treatment agent(s).

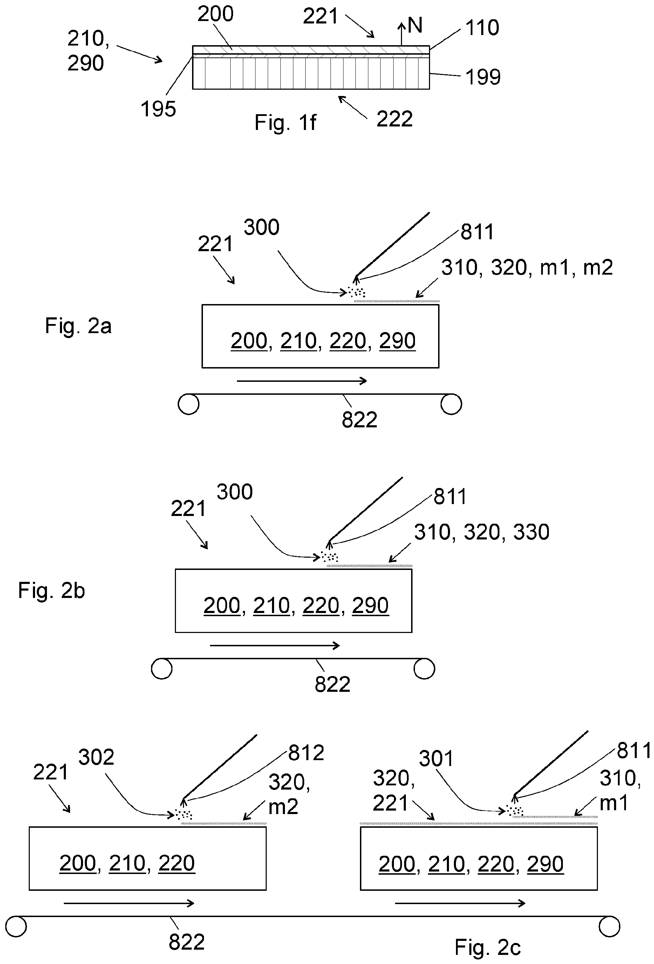

Referring to 2a, in an embodiment, a treatment agent 300 comprising the first hydrophobization agent 310 and the second hydrophobization agent 320 is applied on the first surface 221. The second hydrophobization agent 320 is a resin or a derivative of a resin or a combination thereof. The wood 200 may be part of a wood laminate 210, such as plywood 220. As a result, an article 290 is produced. This applies to the reference numerals 210, 220, 290 also in the other Figs., particularly Figs. 2b to 2e.

Referring to 2b, in an embodiment, a treatment agent 300 comprising the first hydrophobization agent 310, the second hydrophobization agent 320, and the mordant 330 is applied on the first surface 221 of the wood 200. The second hydrophobization agent may be a resin or a derivative of a resin or a combination thereof.

Referring to 2c, in an embodiment, a second treatment agent 302 comprising the second hydrophobization agent 320 is applied on the first surface 221. In addition, thereafter, a first treatment agent 301 comprising the first hydrophobization agent 310 is applied on the first surface 221. Thus, in combination, both first and second hydrophobization agents 310, 320 are applied. Alternatively, the second treatment agent 302 can be applied after the first surface 221 has been treated with the first treatment agent 301. The first and second treatment agents 301, 302 can be applied on the first surface 221 at the same time.

Referring to 2d, in an embodiment, a third treatment agent 303 comprising the mordant 330 is applied on the first surface 221. Thereafter, a second treatment agent 302 comprising the second hydrophobization agent 320 is applied on the first surface 221. In addition, thereafter, a first treatment agent 301 comprising the first hydrophobization agent 310 is applied on the first surface 221. Thus, in combination, the mordant 330 and both first and second hydrophobization agents 310, 320 are applied.

Referring to 2e, in an embodiment, a fourth treatment agent 304 comprising the mordant 330 and the second hydrophobization agent 320 is applied on the first surface 221. In addition, thereafter, a first treatment agent 301 comprising the first hydrophobization agent 310 is applied on the first surface 221. Thus, in combination, the mordant 330 and both first and second hydrophobization agents 310, 320 are applied.

As detailed above, the resin *per se* may be anionic or cationic. However, if a mordant is used, which is the preferable embodiment, the resin of the second hydrophobization agent 320 may bound to the mordant 330. This may happen after the treatment of the surface of the wood, or, if the second hydrophobization agent 320 and the mordant 330 are applied in the form of a treatment agent comprising both of them, the mordant 330 may bind to the second hydrophobization agent 320. Even if the resin *per se* of the hydrophobization agent 320 would be anionic, a combination of the mordant 330 and the resin needs not be anionic. In any case, the mordant 330 seems to improve the binding of the resin even if the resin *per se* is cationic.

As indicated above, the second hydrophobization agent 320 increases the friction, but in terms of water repellence, the first hydrophobization agent 310 is more effective. Thus, there should be an optimal balance for the amounts of the hydrophobization agents 310, 320. For this reason, an embodiment comprises applying a first amount m1 of the first hydrophobization agent 310 onto the first surface 221, and applying a second amount m2 of the second hydrophobization agent 320 onto the first surface 221. Herein the term "amount" refers to the area-specific mass, i.e. the applied mass per area of the first surface 221, expressed e.g. in grams per square metre (g/m²). It has been found that a suitable balance between the friction and the water repellence can be obtained when a ratio (m1/m2) of the first amount m1 to the second amount m2 is from 1/3 to 20; i.e. from 0.33 to 20. Examples include 10 g/m² of wax and 0.5 g/m² of resin; and 2 g/m² of wax and 6 g/m² of resin. Other examples will follow.

In order to have sufficient water repellence, in an embodiment, a sum (m1+m2) of the first amount m1 and the second amount m2 is from 3 g/m² to 25 g/m² as calculated per square metre of an area of the first surface 221.

Concerning specifically the wax (or wax-like solid) or the oil, in an embodiment the first amount m1 is from 1 g/m² to 15 g/m²; preferably 2 g/m² to 10 g/m². Concerning specifically the resin, in an embodiment the second amount m2 is from 0.25 g/m² to 5 g/m²; preferably the second amount m2 is more than 0.5 g/m² and less than 2 g/m².

An embodiment comprises applying a third amount m3 of the mordant 330 onto the first surface 221 and applying a second amount m2 of the second hydrophobization agent 320 onto the first surface 221. It has been found that a suitable binding between the cellulose of the wood 200 and the resin or resin derivative of the second hydrophobization agent 320 is achieved, when a ratio (m3/m2) of the third amount m3 to the second amount m2 is from 0.1 to 2.

It has been found that the treatment as such treats the wood 200 to be suitably hydrophobic and non-slippery. Particularly no other coating is needed. Another coating would also increase manufacturing costs. Therefore, preferably, the method does not comprise attaching a separate solid coating onto the first surface 221 after applying the first hydrophobization agent 310 and second hydrophobization agent 320 onto the first surface 221. Preferably, the method does not comprise coating the first surface 221 after applying the first hydrophobization agent 310 and second hydrophobization agent 320 onto a first surface 221. In contrast, in the method at least some of the first and second hydrophobization agents 310, 320 penetrate into to first surface.

Referring to Fig. 2a, when the first hydrophobization agent 310 and the second hydrophobization agent 320 are applied in the form of the treatment agent 300, preferably, a total content of the first hydrophobization agent 310 and the second hydrophobization agent 320 in the treatment agent 300 is from 5 wt% to 40 wt%, preferably more than 10 wt% and less than 25 wt%. The treatment agent 300 comprises also a carrier, such as water. This content of the hydrophobization agents 310, 320 in the treatment agent 300 ensures easy and even application of the hydrophobization agents 310, 320 onto the first surface 221. For example, the content of the first hydrophobization agent 310 may be more than 10 wt%, such as more than 11 wt%; and the content of the second hydrophobization agent 320 may be more than 0.5 wt%, preferably more than 1 wt%. As an alternative to water, the carrier may comprise a solvent. The first hydrophobization agent 310 may be soluble to the solvent. However, for reasons detailed below, preferably the first hydrophobization agent 310 is insoluble to the carrier. The aforementioned total content (i.e. 5 wt% to 40 wt%, preferably more than 10 wt% and less than 25 wt%) applies also in the embodiment of Fig. 2b, wherein the treatment agent 300 further comprises the mordant 330.

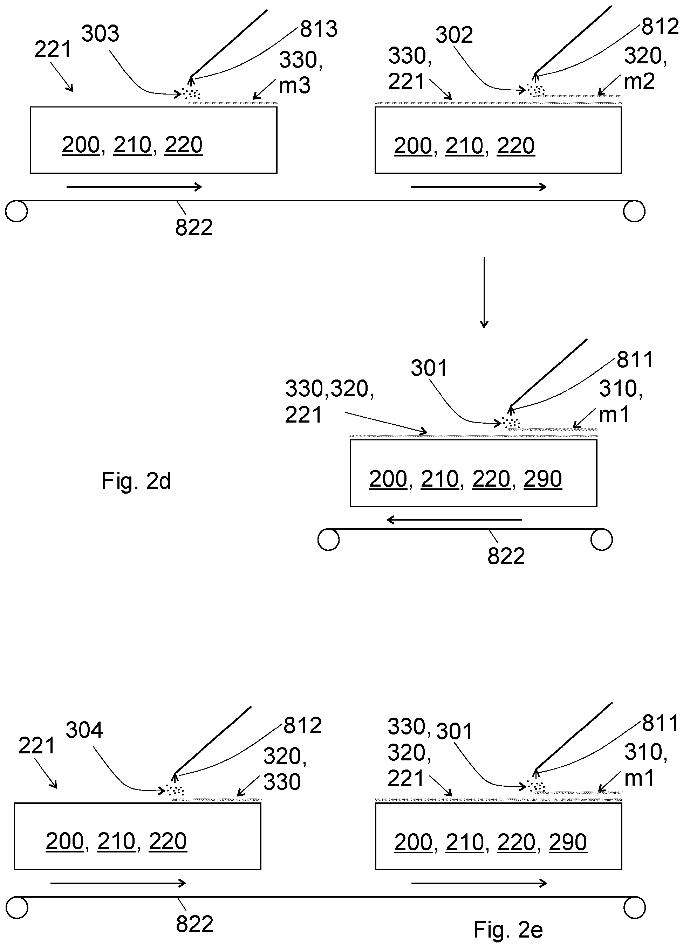

Referring to Fig. 2c, when the first hydrophobization agent 310 is applied in the form of the first treatment agent 300 and the second hydrophobization agent 320 is applied in the form of the second treatment agent 302, preferably a content of the first hydrophobization agent 310 in the first treatment agent 301 is from 5 wt% to 25 wt%, more preferably more than 10 wt% and less than 20 wt%. Moreover, preferably, a content of the second hydrophobization agent 320 in the second treatment agent 302 is from 1 wt% to 10 wt%, preferably more than 2 wt% and less than 5 wt%. What has been said about the carrier of the treatment agent 300 applies to the first and second treatment agents 301, 302 *mutatis mutandis.* These contents of the hydrophobization agents 310, 320 in the treatment agents 301, 302 ensure easy and even application of the hydrophobization agents 310, 320 onto the first surface 221. These contents apply also in the embodiment of Fig. 2d.

Concerning the embodiment of Fig. 2e, preferably, a content of the second hydrophobization agent 320 in the fourth treatment agent 304 is from 1 wt% to 10 wt%, preferably more than 2 wt% and less than 5 wt%, even if the fourth treatment agent 304 further comprises the mordant 330. The content of the mordant 330 in the fourth treatment agent 304 may be selected such that the preferable ratio for the amount of the mordant to the amount of the second hydrophobization agent 320 (i.e. the value of the ratio m3/m2 as detailed above) is achieved.

Concerning the first hydrophobization agent 310, it has been found that when the first hydrophobization agent 310 is in molten form (i.e. in liquid form), it easily spreads evenly onto the first surface 221. While in terms of water repellence this may be beneficial, more typically a high level of breathability is required of the wood. It has been found that waxes and wax-like solids that are not molten when applied provide for a higher breathability for the wood. Therefore, in an embodiment, the first hydrophobization agent 310 is a wax or wax-like solid substance having a melting point of at least 40 °C. Examples of such materials include Carnauba wax, paraffin, and alkene ketene dimer (AKD). Preferably, the first hydrophobization agent 310 comprises alkene ketene dimer (AKD), and may comprise, in addition, some other wax or oil, as detailed above. Preferably, the first hydrophobization agent 310 is alkene ketene dimer (AKD).

As detailed above, the second hydrophobization agent 320 is a resin or a resin derivative. The term resin refers to a solid or highly viscous substance of plant or synthetic origin that is convertible into polymers. Rosin, which is derivable from pines and some other plants, is a special type of resin. As a resin, it is possible to use a natural resin (that is, a resin of biological origin) or a synthetic resin, or a mixture of them; or a mixture of various natural resins; or a mixture of various synthetic resins. In an embodiment the second hydrophobization agent 320 is derivable from softwood or softwood derivative, whereby it is a rosin or a resin or a derivative thereof. More preferably, the second hydrophobization agent 320 is rosin derived from a coniferous tree (or coniferous trees) or a derivative thereof. More preferably, the second hydrophobization agent 320 is rosin derived from tall oil or a derivative of such a rosin. In an embodiment, the second hydrophobization agent 320 is rosin sizing agent.

Instead of a pure resin, or in addition thereto, a derivative of a resin can be used as the second hydrophobization agent 320. The term derivative refers to a fortified, a modified or a saponified resin. For example fortified, modified or saponified coniferous wood rosin can be used as the second hydrophobization agent 320. The rosin may be derived from tall oil. The reactivity of the resin may be improved by bonding carboxylic groups to it by means of organic acids, whereby fortified resin is obtained. Resins can be saponified by means of a base, such as lye. The reactivity of coniferous wood rosin may be improved by bonding carboxylic groups to it by means of organic acids, whereby fortified resin is obtained. Coniferous wood rosin can be saponified by means of a base, such as lye. However, if the second hydrophobization agent 320 comprises a fortified resin, preferably it further comprises resin that has not been fortified. Fortifying the resin to a too large degree may reduce its capability of bonding.

In an embodiment, the second hydrophobization agent 320 comprises at least one of a rosin derived from a coniferous tree (or coniferous trees), and a derivative of the rosin, such as fortified, modified or saponified rosin; and a mordant 330 is also applied on the surface that is treated. Preferably the mordant 330 comprises aluminium (Al). Aluminium has been found to bind well both to the wood and to the resin (in particular the rosin). The aluminium may be comprised in the form of aluminium sulphate (Al₂(SO₄)₃), polyaluminium chloride (PAC), or a double sulphate aluminium salt; or aluminium hydroxide. A double sulphate aluminium salt has the chemical formula X^{c}Al(SO₄)₂, wherein X^{c} is a monovalent cation, such as potassium or ammonium. Polyaluminium chloride (PAC) is a water chemical made up of the elements aluminium, oxygen, hydrogen, and chlorine. For these reasons, in an embodiment, the mordant 330 comprises at least one of aluminium sulphate (Al₂(SO₄)₃), aluminium hydroxide, double sulphate aluminium salt, and polyaluminium chloride (PAC).

Examples of mordants that do not comprise aluminium, or at least need not comprise aluminium, include polyethyleneimines, linear polyamines, and metals that form one or more hydroxides in aqueous solution.

As for the wood 200, of which first surface 221 is treated, the inventors consider that the treatment is applicable to any type of wood 200. However, the inventors have noticed that the treatment is particularly effective for softwood. This is due to the low density of softwood, whereby the softwood is capable of absorbing a higher amount of the hydrophobization agents 310, 320 than e.g. hardwood. In general, softwood is wood from gymnosperm trees such as conifers. An example of softwood is the *Picea* family, which includes spruce and fir. In particular, the treatment has been found particularly effective for European spruce *(Picea abies).* Therefore, in an embodiment the first surface 221 is formed of softwood. Preferably, the first surface 221 is formed of wood belonging to *Picea* family. More preferably, the first surface 221 is formed of European spruce (i.e. *Picea abies).*

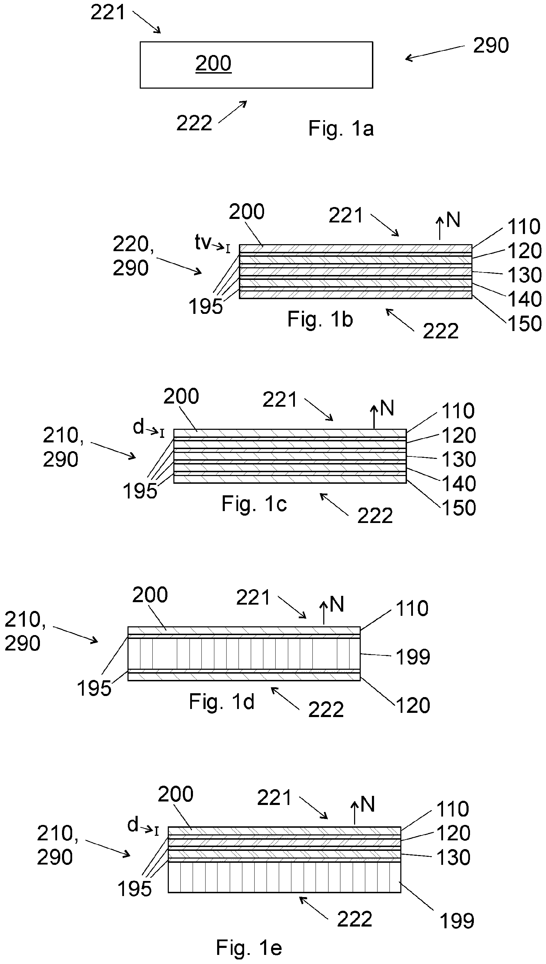

As for the structural details of an article 290 that comprises the wood 200 that is treated, reference is made to Figs. 1a to 1e.

In the most simple case, the wood 200 may be wood of an article 290 formed of the wood 200 only (e.g. a wooden plank or a wooden board or other timber), as shown in Fig. 1a. The first surface 221 that is treated may be any surface of the article 290. Preferably, the first surface 221 that is treated is a surface of which normal is perpendicular to a grain direction of the wood forming the first surface 221.

Referring to Figs. 1b to 1e, in a preferable embodiment, the wood 200 is a wood veneer of laminated wood 210 such as plywood 220. Plywood 220 is a special type of laminated wood 210. Thus, in an embodiment the wood 200 is comprised by laminated wood 210, such as plywood 220.

Referring to Figs. 1b to 1e, laminated wood 210, 220 comprises a first veneer layer 110, a second layer (199, 120, which may be a second veneer layer 120), and adhesive 195 between the first veneer layer 110 and the second layer (199, 120). The adhesive 195 is arranged between the layers in the direction of a thickness tv of the first veneer layer 110. A veneer layer refers to a relatively thin layer of wood. The first veneer layer 110 need not be adjacent to the second layer (120, 199).

It has been found that preferably a surface of a first veneer layer 110 is treated. This is beneficial because then the adhesive layer 195 by which the first veneer layer 110 is attached to the rest of the structure limits the penetration of the hydrophobization agents 310, 320 (and also the treatment agents 300, 301, 302, if used, see above) into the wood. Thus, the hydrophobization agents 310, 320 remain mainly on the surface 221 without penetrating too deep into the wood 200. Therefore, preferably, the first veneer layer 110 forms the first surface 221 of the laminated wood 210, such as the plywood 220.

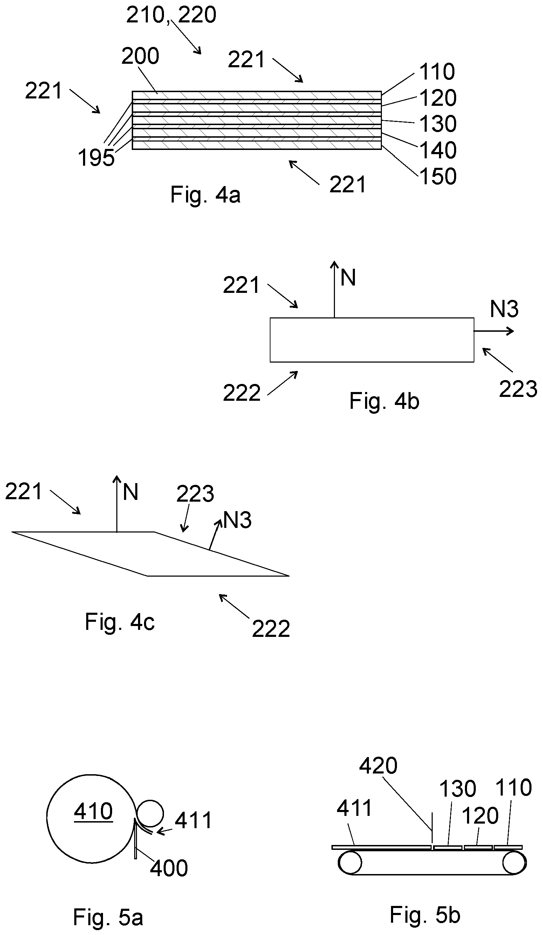

Referring to Fig. 4a, any surface of the laminated wood 210, 220 can be treated by the method, including the largest surface and the surfaces of the edges. Thus, in Fig. 4a, all the surfaces are indicated as being the first surface 221 in the meaning that they can be treated by the hydrophobization agents 310, 320. However, the edges do not form such a surface, of which normal N is unidirectional with a direction of a thickness tv of the first veneer layer 110.

However, because of the low thickness of the first veneer layer 110, preferably, the largest surface formed by the first veneer layer 110 is treated. That is, the first veneer layer 110 forms the first surface 221. Moreover, preferably a normal N of the first surface 221 is unidirectional with a direction of a thickness tv of the first veneer layer 110. It is noted that even if a thickness is generally expressed only as a number, the thickness is measured in a direction, which depends on the orientation of the first veneer layer 110. Thus, the orientation of the fist veneer layer defines a direction of the thickness of the first veneer layer 110. As conventional, the thickness is the smallest of the three different dimensions: length, width, and thickness, measured perpendicular to each other. Reference is made to Figs. 1b to 1e. In such a case, the first surface 221 that is treated is a surface of which normal is perpendicular to a grain direction of the wood veneer forming the first surface 221. This also limits the penetration of the hydrophobization agents 310, 320.

As for the term "veneer layer", typically the first veneer layer 110, which forms the first surface 221, is formed of only one integral piece of wood 200. This improves the visual appearance of the laminated wood 210. As an example, in the embodiment of Fig. 1d, a functional layer 199, arranged as a core, is covered by the first veneer layer 110. The functional layer 199 may be e.g. a honeycomb structure lightening the article 290 or the functional layer 199 may be foam layer or cellular layer for thermal and/or sound insulation or the functional layer 199 may be an oriented strand board (OSB) or particle board for strengthening the article 290 and/or for reducing manufacturing costs.

The laminated wood 210 such a plywood 220 comprises also a second surface 222, which is opposite to the first surface 221. In Fig. 1d, a second veneer layer 120 forms the second surface 222. However, as shown in Fig. 1e, the functional layer 199 (e.g. a board) may form the second surface 222.

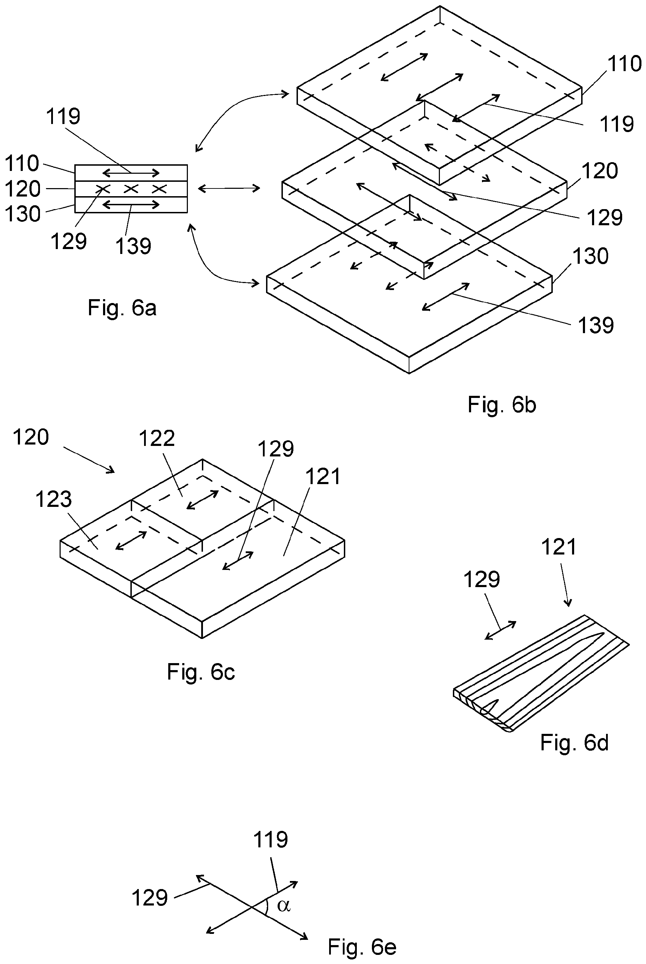

Even if the veneer layer(s) forming surface(s) of the article 290 are preferably formed of an integral piece of wood (each), a core layer may be formed of multiple veneers. For example, in the embodiments of Figs. 1b, 1c, 4, and 6a to 6c, e.g. the second veneer layer 120, which does not form the first surface 221, can be formed of several veneers. Referring to Fig. 6c, the second veneer layer 120 may comprise veneers 121, 122, 123 arranged side by side.

As detailed above, preferably softwood is treated. Thus, in an embodiment, the first veneer layer 110 is made of softwood, such as wood belonging to *Picea* family, such as European spruce (i.e. *Picea abies).*

As detailed above, it is beneficial that the first veneer layer 110, of which surface 221 is treated, is not thick. Therefore, in an embodiment, a thickness tv of the first veneer layer 110 is from 1 mm to 4 mm, such as from 1.4 mm to 3.6 mm.

Such thin veneer can be manufactured e.g. by peeling a log using a lathe. As an example, Fig. 5a shows peeling a log 410 to form at least a veneer web 411 using a lathe (not shown). A lathe comprises a knife 400 that cuts the veneer web(s) 411 from the log 410. Sometimes the peeling of a log 410 produces several non-integral veneer webs 411. In any case, referring to Fig. 5b, a veneer web 411 may be thereafter cut with a cutter 420 to form veneers of the veneer layers 110, 120, 130. In Fig. 5b the veneer layers 110, 120, 130 are indicated to mean that several suitably large veneers are obtained so as to form the veneer layers 110, 120, 130 each comprising only one veneer. However, as detailed above, a core veneer layer may comprise several veneers.

The inventors have also found that the treatment method functions particularly well for such wood that has been cut from a log by peeling. In practice, peeling always produces lathe checks to the veneer web 411, the lathe checks being present also in the veneers, in particular the first veneer layer 110. The lathe checks are reasonably small. Typically their depth is from 30 % to 80 % of the thickness of the veneer and they extend in the direction of the grains of the wood. The lathe checks are reasonable frequent. Typically, a distance between two lathe checks is, on the average, from 1 mm to 5 mm (as measured perpendicular to the direction of grains of the wood). Since the lathe checks do not propagate through the veneer in the direction of thickness of the veneer, oftentimes the first veneer layer 110 is applied on the laminated wood 210, 220 so that the lathe checks are not exposed to the first surface 221 in order to improve the visual appearance of the first surface. In other words, the lathe checks face an interior of the laminated wood 210, 220. Thus, when glued to the rest of the structure (i.e. rest of the article 290), the lathe checks are filled with the adhesive 195 when the first veneer layer 110 is attached to the rest of the structure. Reference is made to Figs. 1b to 1e. As the lathe checks are filled with the adhesive 195, which does not absorb the hydrophobization agents 310, 320, the part of the first veneer layer 110 that absorbs the hydrophobization agents 310, 320 becomes thinner. This concentrates the hydrophobization agents 310, 320 onto the first surface 221, in this way improving the friction and water-repellence properties of the first surface 221. This concentrates the hydrophobization agents 310, 320 onto the first surface 221, particularly, when the thickness tv of the first veneer layer 110 is within the limits discussed above. In this way, the lathe check and the adhesive 195 in combination improve the friction and water-repellence properties of the first surface 221.

For these reasons, in an embodiment, the first veneer layer 110 comprises lathe checks that are indicative of the first veneer layer 110 being produced by peeling. Such an untreated wood laminate 220, 210 can be received, and the first surface 221 thereof can be treated. However, in the alternative, the wood laminate 220, 210 can be manufactured. An embodiment of manufacturing the wood laminate 210, 220 comprises peeling a log 410 using a lathe (of which a knife 400 is shown in Fig. 5a) to form at least one veneer web 411. Then, a veneer of the first veneer layer 110, or the whole first veneer layer, is cut from the veneer web 411. Thus, an embodiment comprises peeling a log 410 to produce at least one veneer web 411 and cutting the veneer web 411 to produce a first veneer, wherein the first veneer layer 110 comprises the first veneer, which is cut from the veneer web produced by peeling.

Referring to Figs. 1b and 1c, the plywood 210 of Fig. 1b is a type of laminated wood. In Figs. 1b and 1c, a grain direction of the grains of the veneers layers 110, 120, 130 are indicated by hatching. As for the term laminated wood, it suffices that the laminated wood comprises some wooden layers that are laminated together; and at least one of these layers is a wooden veneer layer. As an example, in Fig. 1c, grain directions of all the veneer layers 110, 120, 130, 140, 150 are parallel to each other, as indicate by the top-left to bottom-right hatching of the veneer layers. However, also Fig. 1b shows laminated wood, by virtue of having wooden layers attached to each other.

In contrast to Fig. 1c, in plywood of Fig. 1b, at least one of the veneer layers is arranged so that a grain direction thereof is perpendicular to a grain direction of another veneer layer. This is illustrated in more detail in Figs. 6a to 6e. The grain direction of the veneer layers 110, 120, and 130 are indicated by the references 119, 129, and 139, respectively. As shown in Fig. 6b, the grain direction 129 of the second veneer layer 120 is substantially perpendicular to the grain direction 119 of the first veneer layer 110. Referring to Fig. 6c, if a veneer layer 120 comprises several veneers 121, 122, 123, these veneers are typically arranged so that their grain directions are mutually parallel. Referring to Fig 6d, the grain direction 129 is observable e.g. from the annual rings of the veneer 121 as well known to a skilled person.

In an embodiment, the method is applied to plywood 220. Therefore, in an embodiment, a grain direction 119 of a veneer of the first veneer layer 110 forms an angle α of at least 60 degrees with a grain direction 129 of a veneer 121 of the second veneer layer 120. Reference is made to Figs. 6a to 6e.

In an embodiment, also the second surface 222, which is opposite to the first surface 221, is treated in a similar manner. Naturally, in addition or alternatively, also such a second surface 222 that it not opposite to the first surface 221 can be treated by the method. Therefore, an embodiment comprises applying the first hydrophobization agent 310 and the second hydrophobization agent 320 onto a second surface 222 of the wood. This applies to all types of wood, including, but not limited to, wood laminate 210 such as plywood 220.

What has been said about the preferable wood material of the first surface 221 applies to the second surface 222. Therefore, preferably, the second surface 222 is formed of softwood, such as wood belonging to *Picea* family, such as European spruce (i.e. *Picea abies).* Also preferably, the second surface 222 is formed by a veneer layer, such as a veneer of a veneer layer (e.g. 150 of Fig. 1b or 1c; or 120 of Fig. 1d). What has been said about the thickness of the first veneer layer 110 applies to the veneer layer (120, 150) that forms the second surface 222. For similar reasons, an embodiment comprises [A] peeling a log using a lathe to form at least one veneer web comprising lathe checks, and cutting a veneer of the veneer layer 150 forming the second surface 222 from the veneer web or [B] the veneer layer 150 forming the second surface 222 comprises lathe checks that are indicative of the veneer of the layer being produced by peeling. The lathe checks may face an interior of the laminated wood.

What has been said about the orientation of the first surface 221 applies to the second surface 222. Thus, preferably, if/when the second surface 222 is treaded, a normal of the second surface 222 is perpendicular to a grain direction of the wood forming the second surface 222.

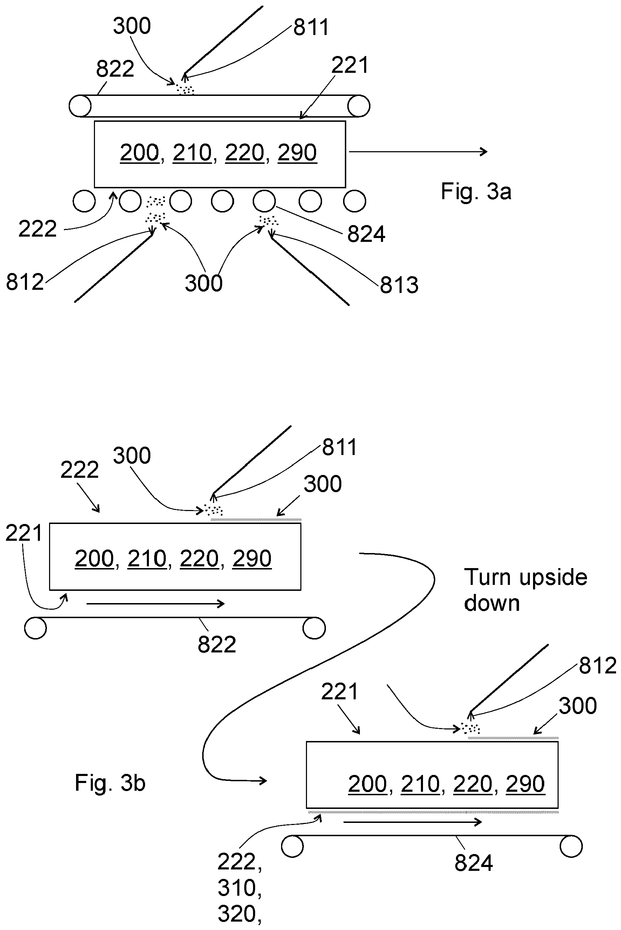

Concerning the application of the hydrophobization agents 310, 320 onto the first surfaces, there are multiple possibilities including brushing, spraying, pouring, dipping, and applying by contacting with a conveyor, e.g. a roller conveyor, or a single roller (see Fig. 3a). It has been found that of these methods, spraying provides for good control of the amount of the hydrophobization agents 310, 320 as well as even application thereof. Furthermore, spraying has the additional benefit that by spraying also the edges become treated at the same time. Thus, even if a treatment agent (300, 301, 302, 304) is sprayed only from one side of the wood 200, also the edges become easily treated. Therefore, in an embodiment, the first hydrophobization agent 310 and the second hydrophobization agent 320, and preferably also the mordant 330, are sprayed onto the first surface 221. They may be sprayed simultaneous through the same nozzle 811 e.g. by spraying a treatment agent 300 comprising both the hydrophobization agents 310, 320 as in Fig. 2a, or the treatment agent 300 comprising both the hydrophobization agents 310, 320 and the mordant 330 as in Fig. 2b. In the alternative, the first hydrophobization agent (e.g. a first treatment agent 301 comprising the first hydrophobization agent 310) may be sprayed using a first nozzle 811, and the second hydrophobization agent (e.g. a second treatment agent 302 comprising the second hydrophobization agent 320, or a fourth treatment agent 304 comprising both the second hydrophobization agent 320 and the mordant 330) may be sprayed using a second nozzle 812. Reference is made to Figs. 2c and 2e.

The treatment agents 301, 302, 303 as discussed above in connection with Fig. 2d, may be applied by spraying.

The treatment agent(s) may be applied, e.g. sprayed, directly onto the surface, as indicated in Figs. 2a to 2e. In the alternative, the treatment agent(s) may be applied indirectly onto the surface, as indicated in Fig. 3a.

In addition to the first surface 221 an opposite second surface 222 is, in an embodiment, treated with the first hydrophobization agent 310 and the second hydrophobization agent 320, and optionally with the mordant 330.

When two opposite surfaces 221 and 222 are treated, there are at least two possibilities, as detailed in Figs. 3a and 3b. In Fig. 3a, both the first and the second surfaces 221, 222 are treated at the same time. In Fig. 3b, the first surface 221 is treated after the second surface 222 has been treated.

The hydrophobization agents 310, 320, e.g. the treatment agent 300 comprising both of them (and optionally also the mordant 330), may be applied onto the first surface 221 by spraying as detailed above. In the alternative or in addition, with reference to Fig. 3a, the hydrophobization agents 310, 320, e.g. the treatment agent 300 comprising both of them (and optionally also the mordant 330), may be applied onto the first surface 221 e.g. using a belt 822 or a roller (shown only in connection with the second surface 222). The treatment agent 300 can be applied on the belt 822 e.g. by spraying through a nozzle 811. The belt 822 contacts the first surface 221 of the wood 200 or wooden article 290 (e.g. laminated wood 210, such as plywood 220) thereby applying the hydrophobization agents 310, 320 onto the first surface 221. In a similar manner, the treatment agent 300 may be applied onto the second surface 222 e.g. using a roller 824. The roller 824 contacts the second surface 222 of the wood 200 or wooden article 290, and may apply the hydrophobization agents 310, 320 onto the second surface 222, if the treatment agent is applied on the roller 824. As an alternative to applying the hydrophobization agents 310, 320 via the roller 824, or in addition thereto, the hydrophobization agents may be sprayed also onto the second surface 824 e.g. as shown in Fig. 3a. The nozzle 812 can be used to directly spray the treatment agent 300 onto the second surface 222 and/or nozzle 813 can be used to spray the treatment agent 300 onto the roller 824, from which the treatment agent 300 is applied to the second surface 222.

Even if not shown, the first and second hydrophobization agents can be applied subsequently to both surfaces 221, 222. Each surface 221, 222 can be treated e.g. as illustrated in Figs. 2c to 2e.

However, preferably, the hydrophobization agents 310, 320 are applied directly on the surfaces 221, 222; i.e. not by first applying on a separate surface of a solid object (e.g. the conveyors 822, 824). Referring to Fig. 3b the wood may be treated e.g. by spraying from one side only. In an embodiment, the wood 200 is turned upside-down after having treated a surface (222, 221) to treat the opposite surface (221, 222, respectively). For example, as shown in Fig. 3b, the second surface 222 can be treated first. Therefore, an embodiment comprises applying first hydrophobization agent 310 and second hydrophobization agent 320 onto the second surface 222, thereafter turning the piece of wood 200 that is treated upside-down, and thereafter applying first hydrophobization agent 310 and second hydrophobization agent 320 onto the first surface 221.

However, the treated second surface 222 can smutch the equipment. Therefore, it has been found that the second surface 222, after having been treated with the agents 310, 320 but before turning the article 290 comprising the wood 200 upside down, can be dried. E.g. a suitable oven or heater, optionally in combination with a fan, can be used for drying. Thus, an embodiment comprises applying first hydrophobization agent 310 and second hydrophobization agent 320 onto the second surface 222, thereafter drying the second surface 222, and thereafter applying first hydrophobization agent 310 and second hydrophobization agent 320 onto the first surface 221. Preferably, the article 290 comprising the wood 200 is turned upside-down after drying the second surface 222 and before applying first hydrophobization agent 310 and second hydrophobization agent 320 onto the first surface 221.

Naturally, also the first surface 221 may be dried after it has been treated. The first surface 221 may be dried irrespective of whether the second surface 222 is treated or not. However, preferably, the first surface 221 is not dried at an excessive temperature, because a very high temperature could change the particle form of the hydrophobization agents 310, 320 to a more continuous form by melting the first hydrophobization agent and/or polymerizing the second hydrophobization agent 320. In addition, too high a temperature may affect the wood material. Therefore, in an embodiment, the first surface 221 is not dried at a temperature of at least 200 °C after applying the hydrophobization agents 310, 320. Preferably, the first surface 221 is not dried at a temperature of at least 150 °C after applying the hydrophobization agents 310, 320. This applies in particular, when the hydrophobization agents 310, 320 are applied in particle form, e.g. in the form of dispersion or emulsion or dispersions or emulsions.

In addition to drying, it has been found that a heat treatment improves the function of the mordant 330. It has been found that a heat treatment improves, on one hand, binding of the mordant 330 to the wood, and on the other hand, binding of the mordant 330 to the second hydrophobization agent 320. In case the mordant 330 and the second hydrophobization agent 320 are comprised by one and the same treatment agent (e.g. 300 or 304), then the mordant 330 may be bound to the second hydrophobization agent 320 already before application onto the wood 200. However, in order to improve the binding of the mordant 330 and thus also the second hydrophobization agent 320 to wood, a heat treatment may be applied.

Therefore, an embodiment comprises, after applying the mordant 330 and the second hydrophobization agent 320 (separately or in a form of a treatment agent 300, 304 comprising both 320 and 330) onto the first surface 221, subjecting the first surface to a heat treatment. Preferably, in the heat treatment, a temperature of the first surface 221 may rise above 50 °C. In addition or alternatively, preferably the heat treatment comprises arranging the first surface 221 to an environment, of which temperature is at least 60 °C (after the application of the mordant 330 and the second hydrophobization agent 320). Such a temperature may be present in an oven. Preferably, the heat treatment, if applied, comprises arranging the first surface 221 to an environment, of which temperature is at least 80 °C (after the application of the mordant 330 and the second hydrophobization agent 320) and/or subjecting the first surface to a heat treatment, wherein a temperature of the first surface 221 rises above 60 °C.

However, as detailed above, preferably, the first surface 221 is not arranged, after the application of the mordant 330 and the second hydrophobization agent 320, to an environment having a temperature of at least 200 °C or at least 150 °C.

Referring to Figs. 4b and 4c, in an embodiment, in addition to the first surface 221, such a third surface 223 of which normal N3 forms an angle of 30 to 150 degrees with the normal N of the first surface 221 is also treated with the first hydrophobization agent 310 and the second hydrophobization agent 320, and optionally also with the mordant 330. Such a third surface 223 may be e.g. an edge surface of a panel, e.g. an edge surface of a panel comprising laminated wood, whereby an angle between the normal N3 of the third surface 223 and the normal N of the first surface 221 may be 90 degrees (as in Fig. 4b). However, the wooden object need not be a panel with right angles (see Fig. 4c). In addition or alternatively, an edge surface (i.e. a third surface 223) may be provided with a tongue and/or a groove. The tongue and/or the groove may have inclined surfaces. Thus, preferably, the third surface 223 comprises a part having a normal N3 that forms an angle of 30 to 150 degrees, preferably 45 to 135 degrees, more preferably 75 to 105 degrees, with the normal N of the first surface 221.

In addition, preferably, at least part of the third surface 223 has been cross-cut e.g. by sawing, from wood. This applies both to laminated wood and to a more general wooden object. Correspondingly, preferably, at least a part of the third surface 223 is formed of such wood that a grain direction of the wood forming the part of the third surface 223 forms an angle of at most 60 degrees, preferably at most 45 degrees or at most 15 degrees, with the normal N3 of the third surface 223. As an example, an edge surface of a plywood panel with right angles is formed of wood veneer, and some of these veneers have grain direction that is parallel to the normal N3 of the edge surface (i.e. the third surface 223). Reference is made to Figs. 4b and 6b. However, other wood, in particular laminated veneer lumber (LVL) or planks, may comprise mutually perpendicular surfaces formed of only such wood of which grain direction is substantially perpendicular to the normal of the surface.

Applying the first hydrophobization agent 310 and the second hydrophobization agent 320 (and optionally the mordant) onto a third surface 223 as discussed above has the effect that also such surfaces are hydrophobized, whereby they do not moisten as easily as without the treatment. This is particularly beneficial, when at least a part of the third surface 223 is formed of such wood that a grain direction of the wood forming the part of the third surface forms an angle of at most 60 degrees (or at most 45 or at most 15 degrees) with a normal N3 of the third surface 223. Otherwise, in such a case, the grains of the wood would easily absorb moisture and convey the moisture into the wood article (optionally the laminated wood) through the grains of the wood.

Even if the second surface 222 is shown in Figs. 4b and 4c, the third surface 223 may be treaded even if the second surface 222 is not treated. All the surfaces 221, 222, 223 (and optionally also other surfaces) may be treated.

In terms of breathability of the treated first surface 221, it is beneficial that the first hydrophobization agent 310 does not form a continuous coating for the first surface. It has been found that such a continuous coating does not become formed, when the first hydrophobization agent 310 and the second hydrophobization agent 320 are applied in the form of small particles. Herein the term "particle" refers to a small object in the solid or the liquid state. Naturally, a temperature may be so low that the particle is in the solid state. For easy application of such particles, they can be comprised by an emulsion or a dispersion or emulsions or dispersions. It seems that the particles spread on the first surface 221 so as to form a discontinuous and breathable hydrophobic surface 221.

The term emulsion refers to a mixture of two or more liquids that are normally immiscible (unmixable or unblendable). The term dispersion refers to a system in which distributed particles of one material are dispersed in a continuous phase of another material. Thus, when hydrophobization agents 310, 320 are in form of solid particles, the treatment agent(s) 300, 301, 302, 304 may be dispersion(s). And when hydrophobization agents 310, 320 are in form of liquid particles, the treatment agent(s) 300, 301, 302, 304 may be emulsion(s).

For example, the treatment agent 300 may be an emulsion or a dispersion comprising particles of the first hydrophobization agent 310 and particles of the second hydrophobization agent 320. As another example, the first treatment agent 301 may be a first emulsion or a first dispersion comprising particles of the first hydrophobization agent 310; and the second treatment agent 302 may be a second emulsion or a second dispersion comprising particles of the second hydrophobization agent 320.

Thus, an embodiment comprises applying the first hydrophobization agent 310 and the second hydrophobization agent 320 in the form of a dispersion or emulsion or dispersions or emulsions. Preferably, the first hydrophobization agent 310 comprises wax having such a melting point that the first hydrophobization agent 310 is applied in the form of a dispersion (i.e. the wax is solid). More preferably, the first hydrophobization agent 310 consist of only such wax or waxes that the first hydrophobization agent 310 is applied in the form of a dispersion (i.e. the wax or all the waxes are solid, and the first hydrophobization agent 310 does not comprise a liquid oil). Preferably, the first hydrophobization agent 310 and the second hydrophobization agent 320 are applied in the form of a dispersion (e.g. the treatment agent 300 comprising both the first hydrophobization agent 310 and the second hydrophobization agent. As for the carrier liquid of the dispersion or emulsion or dispersions or emulsions, preferably water is used. Therefore, preferably, the dispersion or emulsion or dispersions or emulsions is/are aqueous. It is also noted that the water of the treatment agent 300, 301, 302, 304 if used, improves the absorptivity of the first surface 221.

Thus, an embodiment comprises applying the treatment agent 300 onto the first surface 221, wherein the treatment agent 300 is a dispersion or an emulsion comprising the first hydrophobization agent 310 and the second hydrophobization agent 320. An embodiment comprises applying the treatment agent 300 onto the first surface 221, wherein the treatment agent 300 is a dispersion or an emulsion comprising the first hydrophobization agent 310, the second hydrophobization agent 320, and the mordant 330. Reasons for using a mordant 330 have been discussed above.

In such a dispersion or emulsion, a first content c1 equals the content of the first hydrophobization agent 310 in the treatment agent 300; and a second content c2 equals the content of the first hydrophobization agent 310 in the treatment agent 300. These contents are given in wt%.

In order to have an easy applicability, preferably, a total content (c1+c2) of the first hydrophobization agent 310 and the second hydrophobization agent 320 in the dispersion or emulsion is from 5 wt% to 40 wt%, preferably from 10 wt% to 25 wt%. Moreover, to have the beneficial ratio m1/m2 of the amounts of the hydrophobization agents 310, 320 on the first surface 221, the ratio (c1/c2) of their contents in the treatment agent 300 is selected to be within the limits disclosed for the ratio m1/m2 above. In addition, the treatment agent 300 comprises carrier liquid, preferably water.

To have a suitable amounts m1 and m2 of the first and second hydrophobization agents 310, 320 on the first surface 221 (and second surface, if applied thereto), an embodiment comprises applying 10 g/m² to 150 g/m², preferably 25 g/m² to 100 g/m², of the dispersion or emulsion onto the first surface 221 (and the second surface 222, if applied).

In order to have a suitably discontinuous, i.e. breathable, treatment, a size of the particles in the dispersion(s) or emulsion(s) is preferably of the order of one micrometre. More specifically, in an embodiment, a size of the particles of the first hydrophobization agent 310 in a dispersion or emulsion (e.g. the treatment agent 300 or the first treatment agent (301) is from 0.1 µm to 2 µm; preferably 0.5 µm to 1 µm; and a size of the particles of the second hydrophobization agent 320 in a dispersion or emulsion (e.g. the treatment agent 300 or the second treatment agent 302) is from 0.1 µm to 2 µm; preferably 0.3 µm to 1 µm.

Hereinabove the term "size" of the particles of the of the first hydrophobization agent 310 refers to a median of a spherical equivalent diameter (SED) of the particles of the first hydrophobization agent 310 in the dispersion or emulsion. Hereinabove the term "size" of the particles of the of the second hydrophobization agent 320 refers to a median of a spherical equivalent diameter (SED) of the particles of the second hydrophobization agent 320 in the dispersion or emulsion or another dispersion or emulsion.

Hereinabove the term "median" refers to such a size that a half of the particles (by volume) have a larger spherical equivalent diameter (SED) and a half of the particles (by volume) have a smaller spherical equivalent diameter (SED), as determined from a particle size distribution. The particle size distribution refers to a particle size distribution as measurable using a particle size analyser (e.g. Beckman Coulter, model LS 13 320), of which operating principle is based on scattering of light. More specifically, for measuring a size of a particle, the particle is illuminated by a laser, and from the scattering angle and/or scattered intensity, a size of the particle can be calculated using Fraunhofer diffraction theory and Mie scattering theory. The particle is assumed spherical, whereby only one size for a particle is obtained, even if the actual shape of the particle is more complex. Therefore, the measurements give the spherical equivalent diameter (SED) of the particle, even if non-spherical. In this way, for multiple particles, a particle size distribution is obtained (a spherical equivalent diameter for each particle), wherefrom the median is determinable as indicated above. In addition, ultrasonic treatment can be used to break up agglomerates of the particles.

After applying the first hydrophobization agent 310 and the second hydrophobization agent 320 onto the first surface 221, the first surface 221 may be brushed. This may open up small passages for the humidity to penetrate through the first and second hydrophobization agents 310, 320 of the first surface. This may improve the breathability. In addition, brushing improves the evenness of the amounts of the hydrophobization agents 310, 320 on the surfaces.

In order to further increase the breathability, the first hydrophobization agent 310 is preferably applied in solid form, e.g. as solid particles of a dispersion (the dispersion being e.g. the treatment agent 300 or the first treatment agent 301). Therefore, an embodiment comprises applying the first hydrophobization agent 310 such that a temperature of the applied first hydrophobic agent 310 is below the melting point of the first hydrophobization agent 310. In case, the first hydrophobization agent 310 is a combination of two or more waxes, the first hydrophobization agent 310 is preferably applied such that a temperature of the applied first hydrophobic agent 310 is below the melting point of each one of the waxes of the first hydrophobization agent 310.

The term "temperature of the applied first hydrophobic agent 310" refers to a temperature of the first hydrophobic agent 310 at the time of applying it onto the first surface 221. This is one reason, why waxes with a reasonable melting point (see above) are preferable as the first hydrophobization agent 310. In particular, when AKD is used as the first hydrophobization agent 310, the first hydrophobization agent 310 such that a temperature of the applied first hydrophobic agent 310 is below 40 °C.

Moreover, the first surface 221 should be sufficiently absorptive for the hydrophobization agents 310, 320. As detailed above, softwood is preferable. However, too deep penetration should be avoided. Therefore, preferably a veneer, more preferable a veneer comprising lathe checks, is treated (see above), wherein the veneer has been glued to another layer. To further improve the absorptivity of the first surface 221, a temperature of the first surface should be reasonable. Therefore, an embodiment comprises applying the first hydrophobization agent 310 and/or the second hydrophobization agent 320 (preferably both of them) such that a temperature of the first surface 221 is at least 10 °C when the hydrophobic agent(s) is/are applied. This may require heating the first surface 221 if the wood that is treated is stored in cool place (e.g. in an outside warehouse during winter). The first surface may be heated e.g. by storing, during wintertime, in an inside warehouse. If needed, the first surface may be heated e.g. by an oven or a heater before the application of the hydrophobization agents 310, 320.

Another way to improve the absorptivity is to sand the first surface 221 prior to applying either of the hydrophobization agents 310, 320. The sanding may change a roughness of the surface onto which the hydrophobization agents 310, 320 are applied. In addition, the sanding may break the fibres of the wood of the first surface 221 thereby increasing the absorptivity. Thus, an embodiment comprises before applying either of the first hydrophobization agent 310 and the second hydrophobization agent 320 onto the first surface 221, sanding the first surface 221. Moreover, the roughness as such, be it a result of sanding or not, correlates with the absorptivity. Therefore, in an embodiment prior to applying either of the first hydrophobization agent 310 and the second hydrophobization agent 320 onto the first surface 221, the roughness of the first surface 221 is 2 µm or higher, preferably 2 µm to 20 µm; more preferably 3 µm to 20 µm. Herein the roughness is expressed in an Ra value (more details will follow). Moreover, in an embodiment, prior to applying either of the first hydrophobization agent 310 and the second hydrophobization agent 320 onto the first surface 221, the roughness of the first surface 221 is 20 µm or less. Also here, the roughness is expressed in an Ra value.

The Ra value refers to a Roughness average value. The measurement of the surface roughness and its expression in Ra value is described in the standard ISO 4287 (e.g. version 1997/Amd.1:2009(en)). By definition, Ra is the average of absolute deviations of the surface level from the average surface level. The measurements can be taken with, for example, an Innovatest TR-200 device. With this device, the surface level can be measured by means of a sharp diamond needle where the tip of the needle has a radius of 5 µm. The aforementioned Ra values refer to these values, as measured using a needle having a radius of 5 µm.

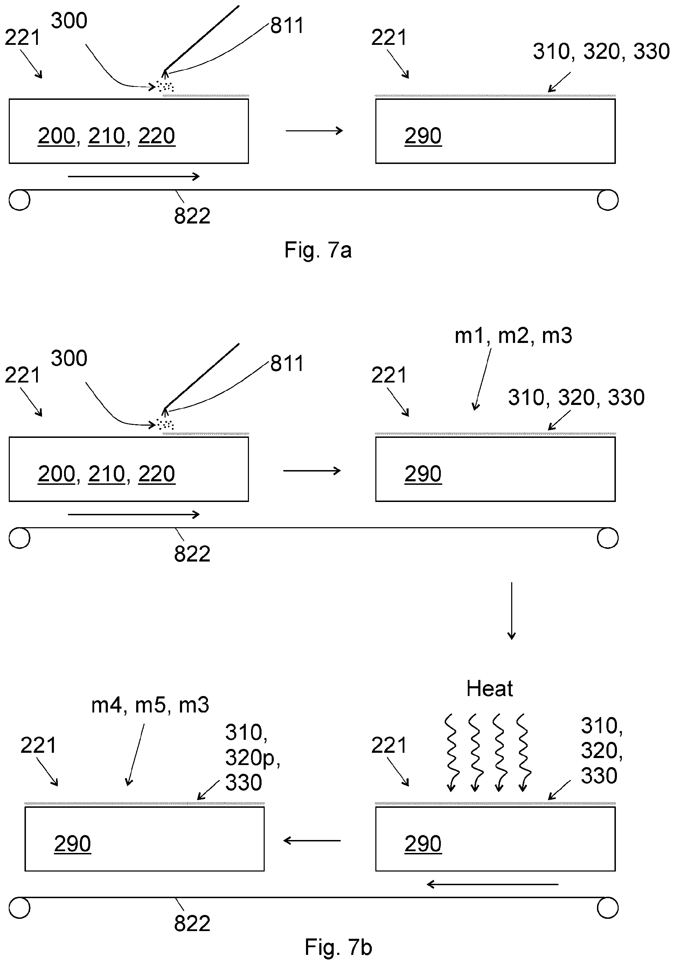

Manufacturing of an article 290 by treating wood 200, being the wood 200 part of laminated wood 210 (e.g. plywood 220) or not, is shown in Figs. 7a and 7b. By treating the wood 200, the article 290 is formed. The article 290 comprises the first surface 221, which has been treated as discussed above.

Referring to Fig. 7a, in an embodiment, the wood 200 is treated only by applying first hydrophobization agent 310 and the second hydrophobization agent 320, and optionally also the mordant 330, onto a first surface 221. Thus, the first surface 221 of the article 290 comprises the first hydrophobization agent 310 and the second hydrophobization agent 320. Because the hydrophobization agents 310, 320 are only applied, the first surface 221 comprises the second hydrophobization agent 320 in the same form as it is applied, hereinafter referred to as a non-polymerized form; i.e. the first surface comprises non-polymerized second hydrophobization agent 320. A mordant 330 may be applied as detailed above.

Referring to Fig. 7b, in an embodiment, the wood 200 is subjected to a heat treatment (for the reasons discussed above) after applying the first hydrophobization agent 310 and the second hydrophobization agent 320, and optionally also the mordant 330, onto the first surface 221. As detailed above, the second hydrophobization agent 320 is a resin or resin derivative. Thus, upon application of heat, the second hydrophobization agent 320 may at least party polymerize to form at least partly polymerized second hydrophobization agent 320p. Thus, in this embodiment, the first surface 221 comprises at least partly polymerized second hydrophobization agent 320p.

As detailed above, the first hydrophobization agent 310 is a wax or an oil or a combination thereof. Thus, it does typically not change chemically during drying.

For these reasons, the article 290 comprises the wood 200. The article 290 comprises the first surface 221. The first surface 221 comprises the first hydrophobization agent 310. The first surface 221 comprises at least one of (i) non-polymerized second hydrophobization agent 320 and (ii) at least partly polymerized second hydrophobization agent 320p. As detailed in connection with the method, in the method, the first hydrophobization agent 310 is a wax or an oil, and the second hydrophobization agent of the article 320 is a resin or a resin derivative. Preferably, in the method, the second hydrophobization agent 320 is one of [A] a resin that is derivable from softwood or from soft wood derivative, such as rosin derived from tall oil, [B] a derivative of a resin that is derivable from softwood or from soft wood derivative, such as rosin derived from tall oil, the derivative of the resin being e.g. fortified, modified or saponified resin, and [C] a mixture [A] and [B]. In the article 290, the second hydrophobization agent 320 of the method may be at least partly polymerized. Preferably, however, the second hydrophobization agent 320 is a rosin, and in the method, the hydrophobization agent 320 is applied at a such low amount and/or is not heated so as to polymerize the rosin. It has been found that the capability of improving friction of the rosin is better in the non-polymerized form than in the polymerized form. Therefore, preferably also in the article 290, the first surface 221 comprises the first hydrophobization agent 310 and non-polymerized second hydrophobization agent 320, wherein the non-polymerized second hydrophobization agent 320 is one of [A] a resin that is derivable from softwood or from soft wood derivative, such as rosin derived from tall oil, [B] a derivative of a resin that is derivable from softwood or from soft wood derivative, such as rosin derived from tall oil, the derivative of the resin being e.g. fortified, modified or saponified resin, and [C] a mixture [A] and [B]. Preferably, the first surface 221 comprises the mordant 330, e.g. aluminium.

Moreover, the first surface 221 is formed of the wood 200 that has been treated by the hydrophobization agents 310, 320. Thus, a surface of the wood 200 has been treated such that the treated surface of the wood 200 forms the first surface 221 of the article 290. The article 290 needs not to have any other coating on the first surface 221. Thus, in an embodiment, the first surface 221 is exposed to environment and formed by the wood that has been treated.

Because the first amount of m1 of the first hydrophobization agent 310 is applied on the first surface 221, the first surface 221 of the article 290 comprises a fourth amount m4 of the first hydrophobization agent 310 on the first surface 221 (see Fig. 7b). What has been said about the composition of the first hydrophobization agent 310 in connection with the method applies. Evidently some oil may vaporize during drying. Thus, the fourth amount m4 may be slightly less than the first amount m1. However, for increasing hydrophobicity, only a minor part of the oil, if any, should vaporize during drying. Thus, the fourth amount m4 may be substantially equal to the first amount m1.

Because the second amount of m2 of the second hydrophobization agent 320 is applied on the first surface 221, the first surface 221 of the article 290 comprises a fifth amount m5 of the second hydrophobization agent 320 and the at least partly polymerized second hydrophobization agent 320p in total (see Fig. 7b). In case the second hydrophobization agent 320 polymerizes, some water is produced in addition to the polymerized second hydrophobization agent 320p. The water may evaporate during drying. Therefore, the fifth amount m5 may be slightly less than the second amount m2. At least when the resin does not polymerize, the fifth amount m5 may be substantially equal to the second amount m2.

However, the mass change is often not significant. Therefore, what is been said about the ratio m1/m2 applies to the ratio m4/m5. Moreover, what is been said about the sum m1+m2 applies to the sum m4+m5. Moreover, what has been said about the values m1 and m2 independent of each other applies to the amounts m4 and m5, respectively, independent of each other.

Thus, in an embodiment, a ratio (m4/m5) of the fourth amount m4 to the fifth amount m5 is from 1/3 to 20; i.e. from 0.33 to 20. Moreover, in an embodiment, a sum (m4+m5) of the fourth amount m4 and the fifth amount m5 is from 3 g/m² to 25 g/m² as calculated per square metre of an area of the first surface 221 of the article 290. In an embodiment, the fourth amount m4 is from 1 g/m² to 15 g/m², preferably 2 g/m² to 10 g/m², as calculated per square metre of an area of the first surface 221. In an embodiment, the fifth amount m5 is from 0.25 g/m² to 5 g/m² as calculated per square metre of an area of the first surface 221. In an embodiment, the fifth amount m5 is more than 0.5 g/m² and less than 2 g/m².

However, preferably, the first surface is not dried at an elevated temperature. When the first surface is not dried or is dried only at a low temperature, the second hydrophobization agent 320 does not (further) polymerize. Therefore, preferably, first surface 221 comprises the second hydrophobization agent 320 and does not comprise the least partly polymerized second hydrophobization agent 320p. Moreover, in this case, the fifth amount m5 equals the second amount m2 of the second hydrophobization agent 320 only. What has been said about the fifth amount m5 independent of the fourth amount m4 in in combination therewith (the ratio m4/m5 and the sum m4+m5) applies also in this case.

When a mordant has been applied, the third amount m3 of it has been applied, as detailed above. Typically, the (optional) drying, if even done, does not affect the third amount m3. Thus, the first surface 221 of the article 290 comprises the third amount m3 of the mordant on the first surface 221. In an embodiment, a ratio (m3/m5) of the third amount m3 to the fifth amount m5 (that of the resin or resin derivative, optionally at least partly polymerized) is from 0.1 to 2.

In an embodiment of the article 290, the mordant 330 comprises aluminium (Al). For example, the mordant 330 may comprise at least one of aluminium sulphate (Al₂(SO₄)₃), polyaluminium chloride (PAC), or aluminium hydroxide, and double sulphate aluminium salt (X^{c}Al(SO₄)₂), wherein X^{c} is a monovalent cation, such as potassium, ammonium, polyethyleneimine, a linear polyamine, or a metal that form hydroxides). As detailed above, the mordant 330 of the article 290 may comprise, in the alternative or addition, a compound that need not comprise aluminium, such as polyethyleneimine, a linear polyamine, and/or a metal that forms a hydroxide/hydroxides.

What has been said about the wood 200 that is treated in connection with the method applies for the article 290 *mutatis mutandis.* Therefore, preferably, the first surface 221 of the article 290 is formed of softwood, more preferably of wood belonging to *Picea* family, such as European spruce (i.e. *Picea abies).* Preferably, a normal of the first surface 221 is perpendicular to a grain direction of the wood material forming the first surface 221. Preferably, the first surface 221 is a surface of laminated wood (210, 220), such as a surface of plywood 220.

For example, the article 290 may be a piece of laminated wood 210, such as plywood 220. In such a case, the article 290 comprises a first veneer layer 110 that forms the first surface 221 such that a normal N of the first surface 221 is unidirectional with a direction of a thickness tp of first veneer layer 110. Reference is made to Figs. 1b to 1f. In addition, the article 290 comprises a second layer (120, 199), and adhesive 195 between the layers. A second surface 222 of the article 290 is arranged opposite to the first surface 221. In an embodiment, the second layer is a second veneer layer 120 (see Figs. 1b to 1d). However, second layer may be a functional layer 199 (see Figs. 1e and 1f).

For the reasons detailed in connection with the method, preferably, the first veneer layer 110 is made of softwood, such as wood belonging to *Picea* family, such as European spruce (i.e. *Picea abies).* Preferably, a thickness tv of the first veneer layer 110 is from 1 mm to 4 mm, such as from 1.4 mm to 3.6 mm. Preferably, the first veneer layer 110 comprises a first veneer having lathe checks that are indicative of the first veneer being produced by peeling. In an embodiment, in the article 290, the lathe checks face an interior of the article 290.

In an embodiment, also the second surface 222 of the article 290 has been treated in a similar manner as the first surface 221. Thus, in an embodiment, the second surface 222 of the article 290 - be it a surface of a wood laminate 210, 220 or not - comprises the first hydrophobization agent 310 and at least one of non-polymerized second hydrophobization agent 320 and at least partly polymerized second hydrophobization agent 320p. The second surface 222 may comprise the mordant 330. Preferably, the second surface 222 is a surface of a wood laminate 210, 220. More preferably, the second surface 222 is formed by a veneer layer. E.g. in Figs. 1b and 1c, a fifth veneer layer 150 forms the second surface, and in Fig. 1d, the second veneer layer 120 forms the second surface 222. What has been said about the material and thickness of the first veneer layer 110 applies to the veneer layer (120, 150) that form the second surface 222.

Preferably, the article 290 comprises plywood 220. Preferably, the article 290 comprises a part of plywood 220, e.g. a part made of plywood 220. In such a case, the second layer of the laminate 210 is a second veneer layer 120. Moreover, a grain direction 119 of a veneer of the first veneer layer 110 forms an angle α of at least 60 degrees with a grain direction 129 of a veneer 121 of the second veneer layer 120.

When the hydrophobization agents 310, 320 are applied in particle form and the article 290 is not dried at an excessive temperature, the hydrophobization agents 310, 320 remain in the particle form on the first surface 221. Reasons for using the agents 310, 320 in particle form, as well as a proper size of the particles, have been discussed in connection with the method. Thus, in an embodiment, the first surface 221 comprises particles of the first hydrophobization agent 310 and particles of the second hydrophobization agent 320. Moreover, in an embodiment, a size of the particles of the first hydrophobization agent (310) is from 0.1 µm to 2 µm; preferably 0.5 µm to 1 µm. In an embodiment, a size of the particles of the second hydrophobization agent 320 is from 0.1 µm to 2 µm; preferably 0.5 µm to 1 µm. What has been said about the meaning of the "size" in connection with the method applies for the article 290.

As detailed in connection with the method, preferably, the hydrophobization agents 310, 320 are applied on a suitably rough surface. The roughness of the first surface 221 has been disclosed in connection with the method. Typically, the application of the reasonably small amounts of the hydrophobization agents 310, 320 as detailed in connection with the method does not significantly change the surface roughness. Thus, in an embodiment, also in the article 290, a roughness of the first surface 221, expressed in Ra value, is 2 µm or higher; preferably 2 µm to 20 µm; more preferably 3 µm to 20 µm. Moreover, in an embodiment, a roughness of the first surface 221, expressed in Ra value, is 20 µm or lower.

Preferably, the article 290 is a panel, more preferably a panel of laminated wood 210, even more preferably, a plywood 220 panel. Because of the water repellence of the first surface 221 (and also the second surface 222, if treated), the article 290 can be stored and/or used and/or handled outside. In particular, it can be handled, even if moist, with a lesser risk of slipping; e.g. the panel slipping from the hands of a constructor and/or the constructor falling, when walking or standing on such a panel, e.g. when the panel has been applied on a roof. Thus, a preferably use of the article is a use as a construction panel. The first surface 221 may be wet in the use.

### Experimental

In order to test both the water repellence and risk of slipping, these properties were measured from panels treated in different ways and by using an untreated panel as a reference.

More precisely, the following types of spruce plywood panels were studies:
(1) Untreated
(2) Treated with only AKD (6 g/m²)
(3) Treated with fortified Rosin (1.5 g/m²) and polyaluminium chloride (PAC,1.5 g/m²)
(4) Treated with AKD (6 g/m²), fortified Rosin (2.5 g/m²), and polyaluminium chloride (PAC, 2.5 g/m²)

In the panel (2), the AKD was applied as an aqueous dispersion (AKD content 18 wt-%). In the panel (3), the fortified Rosin and the PAC were applied as an aqueous dispersion (Rosin content 1.5 wt-%). In the panel (4), the AKD, the fortified Rosin, and the PAC were applied as a treatment agent that was an aqueous dispersion (AKD content 12 wt-%, Rosin content 5 wt-%, PAC content 5 wt-%). In the panels (3) and (4), the fortified Rosin had been derived from tall oil.

Before measuring, the panels were stabilized in a controlled atmosphere; at a temperature 23 °C and in a relative humidity 50 %RH.

For measuring the contact angle, a drop of water (that is, three drops of water) is (are) provided on the first surface 221, which in the samples 2, 3, and 4, is treated as detailed above, and the contact angle(s) of the drop(s) of water, that is, the angle(s) formed by the surface of each drop of water with the first surface 221, is (are) measured. It may take some time for the drop of water to assume a permanent shape on the first surface 221. The contact angle may be measured 5 seconds after applying the drop of water onto the first surface 221. In practice, a device suitable for this measurement is used. For these measurements, a KRÜSS DSA25 Expert Drop Shape Analyzer was used. The size of the drop may be significant. In measurements of the contact angle, a drop having a volume of 6.5 µl is used. The contact angle is measured at room temperature 25°C. The water used is ultrapure water which is often called Millipore water. Such water is classified as type 1 water in the standard ISO 3696. The purity of the water is indicated by, for example, its electrical resistivity. The resistivity of the water used, ultrapure water, is 18 MΩ×cm at the temperature of 25 °C. When determining the contact angle, a sessile drop method was used.

The risk for slipping was measured by conducting Pendulum Tests in accordance with British Standard BS 7976-2 according to UKSRG (UK slip resistance group) Guidelines.

The results are shown in Table 1.

**Table 1: Contact angle and pendulum test results for the four types of samples.**

| | **Treatment** | **Contact angle** | **Pendulun test result (WET)** |
|---|---|---|---|
| 1 | Untreated | 127 | 26 |
| 2 | AKD | 146 | 24 |
| 3 | Rosin | 143 | 34 |
| 4 | AKD + Rosin | 151 | 28 |

In general, the higher the contact angle, the more hydrophobic is the surface. Moreover, the lower the pendulum test result, the higher the risk of slipping (the lower the friction). Thus, in an optimal panel, both the values should be large.

Concerning the treatment with only AKD, the results confirm the findings of prior art (see section Background) indicating that AKD treatment makes the surface more hydrophobic and more slippery. In comparison to untreated surface, the contact angle increases from 127 degrees to 146 degrees; and in terms of pendulum test value, the results decrease from 26 to 24 (indicating a more slippery surface).

Concerning the treatment with only the Rosin, in comparison to untreated surface, the contact angle increases from 127 degrees to 143 degrees; and in terms of pendulum test value, the results increase from 26 to 34 (indicating a less slippery surface). However, in terms of the contact angle, Rosin does not function as well as the AKD.

Finally, and surprisingly, a treatment with a combination of AKD and the Rosin increases the contact angle to 151 degrees. This indicates the most hydrophobic surface of all the tested samples. Moreover, in terms of the pendulum test value, while the surface is more slippery that the surface treated with only Rosin, the surface is less slippery than the untreated surface or the surface treated with only AKD. As indicated above, the difference between the samples 2 and 4 is the addition of the Rosin and the PAC to the sample 4 compared to 2. However, the amount of AKD is the same in both sample. Thus, the addition of resin not only improves the water repellence but in addition increases the friction.

The results indicate the combination of AKD and rosin give a good balance for the hydrophobicity and the slip risk of the treated surface.

The inventors believe that also other resin in connection with a wax or an oil is capable of reducing the slip risk compared to a treatment with the wax or the oil only, respectively. Moreover, the inventors believe that also other oil or wax than the AKD can improve the hydrophobicity. However, as detailed in the specification, the inventors believe that a non-continuous wax layer has the additional benefit of maintaining the breathability of the treated surface.

### Examples describing embodiments of the method for treating wood:

1. A method for treating wood (200), the method comprising
   - applying first hydrophobization agent (310) and second hydrophobization agent (320) onto a first surface (221) of the wood (200), wherein
   - the first hydrophobization agent (310) is a wax, a wax-like solid, an oil, a combination of waxes and/or wax-like solids, a combination of oils, or a combination of at least one oil and at least one wax or wax-like solid, and
   - the second hydrophobization agent (320) is a resin or a derivative of a resin or a combination thereof.
2. The method of Example 1, comprising
   - applying treatment agent (300) onto the first surface (221), wherein the treatment agent (300) comprises the first hydrophobization agent (310) and the second hydrophobization agent (320);
      preferably,
   - the treatment agent (300) further comprises mordant (330).
3. The method of Example 2, wherein
   - a total content of the first hydrophobization agent (310) and the second hydrophobization agent (320) in the treatment agent (300) is from 5 wt% to 40 wt%, preferably more than 10 wt% and less than 25 wt%;
      preferably,
   - a content of the first hydrophobization agent (310) in the treatment agent (300) is more than 10 wt% and
   - a content of the second hydrophobization agent (320) in the treatment agent (300) is more than 0.5 wt%.
4. The method of Example 1, comprising
   - applying first treatment agent (301) comprising first hydrophobization agent (310) and
   - applying second treatment agent (302, 304) comprising second hydrophobization agent (320) onto the first surface (221);
      preferably
   - the second treatment agent (302, 304) comprises mordant (330).
5. The method of Example 4, wherein
   - a content of the first hydrophobization agent (310) in the first treatment agent (301) is from 5 wt% to 25 wt%, preferably more than 10 wt% and less than 20 wt%, and
   - a content of the second hydrophobization agent (320) in the second treatment agent (302, 304) is from 1 wt% to 10 wt%, preferably more than 2 wt% and less than 5 wt%.
6. The method of any of the Examples 1 to 5, comprising
   - applying a first amount (m1) of the first hydrophobization agent (310) onto the first surface (221), and
   - applying a second amount (m2) of the second hydrophobization agent (320) onto the first surface (221).
7. The method of the Example 6, wherein
   - a ratio (m1/m2) of the first amount (m1) to the second amount (m2) is from 0.33 to 20.
8. The method of any of the Example 6 or 7, wherein
   - a sum (m1+m2) of the first amount (m1) and the second amount (m2) is from 3 g/m² to 25 g/m² as calculated per square metre of an area of the first surface (221).
9. The method of any of the Examples 6 to 8, wherein
   - the first amount (m1) is from 1 g/m² to 15 g/m² as calculated per square metre of an area of the first surface (221);
      preferably
   - the first amount (m1) is from 2 g/m² to 10 g/m² .
10. The method of any of the Examples 6 to 9, wherein
   - the second amount (m2) is from 0.25 g to 5 g per square metre of an area of the first surface (221),
      preferably
   - the second amount (m2) is more than 0.5 g/m² and less than 2 g/m².
11. The method of any of the Examples 1 to 10, wherein
   - the first hydrophobization agent (310) is a wax or a wax-like solid having a melting point of at least 40 °C.
12. The method of any of the Examples 1 to 11, wherein
   - the first hydrophobization agent (310) comprises alkene ketene dimer (AKD); preferably,
   - the first hydrophobization agent (310) is alkene ketene dimer (AKD).
13. The method of any of the Examples 1 to 12, wherein
   - the first surface (221) is formed of softwood, such as wood belonging to *Picea* family, such as European spruce (i.e. *Picea abies).*
14. The method of any of the Examples 1 to 13, comprising
   - applying first hydrophobization agent (310) and second hydrophobization agent (320) onto a second surface (222) of the wood (200, 210, 220); preferably,
   - the second surface (222) is opposite the first surface (221).
15. The method of the Example 14, wherein
   - the second surface (222) is formed of softwood, such as wood belonging to *Picea* family, such as European spruce (i.e. *Picea abies).*
16. The method of the Example 14 or 15, wherein
   - the second surface (222) is arranged opposite to the first surface (221), the method comprising
   - applying first hydrophobization agent (310) and second hydrophobization agent (320) onto the second surface (222), thereafter
   - drying the second surface (222), and thereafter
   - applying first hydrophobization agent (310) and second hydrophobization agent (320) onto the first surface (221);
      preferably,
   - the article (290) comprising the wood (200) is turned upside-down after treating the second surface (222) and before applying first hydrophobization agent (310) and second hydrophobization agent (320) onto the first surface (221); more preferably,
   - the article (290) comprising the wood (200) is turned upside-down after drying the second surface (222).
17. The method of any of the Examples 1 to 16, wherein
   - the wood (200) is comprised by laminated wood (210), such as plywood (220).
18. The method of the Example 17, wherein
   - the laminated wood (210, 220) comprises
      - a first veneer layer (110),
      - a second layer, and
      - adhesive (195) between the layers (110, 120, 130, 140, 150, 199), wherein
   - a/the second surface (222) of the laminated wood (210, 220) is arranged opposite to the first surface (221),
   - the first veneer layer (110) forms the first surface (221) of the laminated wood (210, 220), and
   - a normal (N) of the first surface (221) is unidirectional with a direction of a thickness (tv) of the first veneer layer (110); preferably,
   - the second layer is a second veneer layer (120).
19. The method of the Example 18, wherein
   - the first veneer layer (110) is made of softwood, such as wood belonging to *Picea* family, such as European spruce (i.e. *Picea abies).*
20. The method of the Example 18 or 19, comprising
   [A]
      - peeling a log (410) using a lathe (400) to form at least one veneer web (411) comprising lathe checks, and
      - cutting a first veneer of the first veneer layer (110) from the veneer web (411) or
   [B]
      - the first veneer layer (110) comprises a first veneer having lathe checks that are indicative of the first veneer being produced by peeling;
         preferably,
      - the lathe checks face an interior of the laminated wood (210, 220).
21. The method of any of the Examples 18 to 20, wherein
   - a thickness (tv) of the first veneer layer (110) is from 1 mm to 4 mm, such as from 1.4 mm to 3.6 mm.
22. The method of any of the Examples 18 to 21, wherein
   - the second layer is a second veneer layer (120) and
   - a grain direction (119) of a veneer of the first veneer layer (110) forms an angle (α) of at least 60 degrees with a grain direction (129) of a veneer (121) of the second veneer layer (120).
23. The method of any of the Examples 14 to 22, wherein
   - the second surface (222) is formed by a veneer layer,
      preferably,
   - the second surface (222) is formed by a veneer.
24. The method of any of the Examples 1 to 23, wherein
   - the first hydrophobization agent (310) and the second hydrophobization agent (320) are sprayed onto the first surface (221).
25. The method of the Example 24, wherein
   - the first hydrophobization agent (310) is sprayed onto the first surface (221) through a nozzle (811) and
   - the second hydrophobization agent (320) is sprayed onto the first surface (221) through the nozzle (811);
      preferably,
   - the first hydrophobization agent (310) and the second hydrophobization agent (320) are sprayed onto the first surface (221) through the nozzle (811) simultaneously;
      more preferably,
   - the first hydrophobization agent (310), the second hydrophobization agent (320), and a/the mordant (330) are sprayed onto the first surface (221) through the nozzle (811) simultaneously.
26. The method of any of the Examples 1 to 25, comprising - applying the first hydrophobization agent (310) such that a temperature of the applied first hydrophobic agent (310) is below the melting point of the first hydrophobization agent (310).
27. The method of any of the Examples 1 to 26, comprising
   - applying the first hydrophobization agent (310) and/or the second hydrophobization agent (320) such that a temperature of the first surface (221) is at least 10 °C when the hydrophobic agent(s) is/are applied on the first surface (221);
      optionally, the method comprises
   - heating the first surface (221).
28. The method of any of the Examples 1 to 27, comprising
   - applying the first hydrophobization agent (310) and the second hydrophobization agent (320) in the form of a dispersion or emulsion or dispersions or emulsions;
      preferably,
   - the dispersion or emulsion or dispersions or emulsions is/are aqueous.
29. The method of the Example 28, wherein
   - a size of the particles of the first hydrophobization agent (310) in a dispersion or emulsion comprising the first hydrophobization agent (310) is from 0.1 µm to 2 µm; preferably 0.5 µm to 1 µm; and
   - a size of the particles of the second hydrophobization agent (320) in a dispersion or emulsion comprising the first hydrophobization agent (320) is from 0.1 µm to 2 µm; preferably 0.3 µm to 1 µm.
30. The method of the Example 28 or 29, comprising
   - applying a treatment agent (300) onto the first surface (221), wherein
   - the treatment agent (300) is dispersion or an emulsion comprising the first hydrophobization agent (310) and the second hydrophobization agent (320), and optionally also the mordant (330),
   - a total content of the first hydrophobization agent (310) and the second hydrophobization agent (320) in the dispersion or emulsion is from 5 wt% to 40 wt%, preferably more than 10 wt% and less than 25 wt%.
31. The method of the Example 30, wherein
   - the treatment agent (300) comprises water.
32. The method of the Example 30 or 31, comprising
   - applying 10 g/m² to 150 g/m², preferably 25 g/m² to 100 g/m², of the dispersion or emulsion onto the first surface (221).
33. The method of any of the Examples 28 to 32, wherein
   - the second hydrophobization agent (320) and a/the mordant (330) are applied in the form of a dispersion comprising at least the second hydrophobization agent (320) and the mordant (330);
      preferably,
   - the first hydrophobization agent (310), the second hydrophobization agent (320), and a/the mordant (330) are applied in the form of a dispersion comprising the first hydrophobization agent (310), the second hydrophobization agent (320), and the mordant (330).
34. The method of any of the Examples 1 to 33, comprising
   - after applying the first hydrophobization agent (310) and the second hydrophobization agent (320) onto the first surface (221), brushing the first surface (221).
35. The method of any of the Examples 1 to 34, comprising
   - before applying either of the first hydrophobization agent (310) and the second hydrophobization agent (320) onto the first surface (221), sanding the first surface (221).
36. The method of any of the Examples 1 to 35, comprising
   - prior to applying either of the first hydrophobization agent (310) and the second hydrophobization agent (320) onto the first surface (221), the roughness of the first surface (221) is 2 µm or higher, preferably 2 µm to 20 µm; more preferably 3 µm to 20 µm, wherein
   - the roughness is expressed in an Ra value.
37. The method of any of the Examples 1 to 36, comprising
   - prior to applying either of the first hydrophobization agent (310) and the second hydrophobization agent (320) onto the first surface (221), the roughness of the first surface (221) is 20 µm or less, wherein
   - the roughness is expressed in an Ra value.
38. The method of any of the Examples 1 to 37, wherein
   - the second hydrophobization agent (320) is derivable from softwood or soft wood derivative and is a resin or rosin, or a resin derivative, such as a rosin derivative;
      preferably,
   - the second hydrophobization agent (320) is rosin derived from tall oil, or a derivative thereof.
39. The method of any of the Examples 1 to 38, wherein
   - the second hydrophobization agent (320) is one of the following or a combination of at least two of the following
      - rosin derived from a coniferous tree,
      - saponified rosin derived from a coniferous tree
      - fortified rosin derived from a coniferous tree, or
      - modified rosin derived from a coniferous tree;
      preferably,
   - the second hydrophobization agent is one of the following or a combination of at least two of the following
      - rosin derived from tall oil,
      - saponified rosin derived from tall oil
      - fortified rosin derived from tall oil, or
      - modified rosin derived from tall oil.
40. The method of the Example 39, comprising
   - applying a mordant (330) onto the first surface (221).
41. The method of the any of the Examples 1 to 40, comprising
   - applying a/the second amount (m2) of the second hydrophobization agent (320) onto the first surface (221) and
   - applying a third amount (m3) of the mordant (330) onto the first surface, wherein
   - a ratio (m3/m2) of the third amount (m3) to the second amount (m2) is from 0.1 to 2.
42. The method of the Example 41, wherein
   - the mordant (330) comprises aluminium (Al) and/or
   - the mordant (330) comprises at least one of a polyethyleneimine, a linear polyamine, and a metal hydroxide.
43. The method of the Example 42, wherein
   - the mordant (330) comprises at least one of aluminium sulphate (Al₂(SO₄)₃), aluminium hydroxide, polyaluminium chloride (PAC), and double sulphate aluminium salt (X^{c}Al(SO₄)₂, wherein X^{c} is a monovalent cation, such as potassium, ammonium, polyethyleneimine, a linear polyamines, or a metal that form hydroxides).
44. The method of any of the Examples 1 to 43, wherein
   - the method does not comprise attaching a separate solid coating onto the first surface (221).
45. The method of any of the Examples 1 to 44, wherein
   - the method does not comprise forming or attaching a solid coating onto the first surface (221) after applying the first hydrophobization agent (310) and second hydrophobization agent (320) onto a first surface (221).
46. The method of any of the Examples 1 to 45, wherein
   - a normal of the first surface (221) is perpendicular to a grain direction of the wood (200) forming the first surface (221).
47. The method of any of the Examples 1 to 46, comprising
   - applying first hydrophobization agent (310) and second hydrophobization agent (320) onto a third surface (223) of the wood (200, 210, 220), wherein
   - the third surface (223) comprises a part having a normal (N3) that forms an angle of 30 to 150 degrees with a normal (N) of the first surface (221); preferably, the method comprises
   - applying first hydrophobization agent (310), second hydrophobization agent (320), and mordant (330) onto the third surface (223) of the wood (200, 210, 220).
48. The method of Example 47, wherein
   - a part of the third surface (223) is formed of such wood that a grain direction of the wood forming the part of the third surface (223) forms an angle of at most 60 degrees with a normal (N3) of the third surface (223).
49. The method of Example 47 or 48, wherein
   - the third surface (223) comprises a tongue and/or a groove.

### Examples describing an article comprising wood treated by the method:

51. An article (290) comprising wood (200), the article (290) comprising
   - a first surface (221) comprising first hydrophobization agent (310) and at least one of second hydrophobization agent (320) and at least partly polymerized second hydrophobization agent (320p), wherein
   - the first hydrophobization agent (310) is a wax, a wax-like solid, an oil, a combination of waxes and/or wax-like solids, a combination of oils, or a combination of at least one oil and at least one wax or wax-like solid, and
   - the second hydrophobization agent of the article (320) is a resin or a resin derivative or a combination thereof, and
   - a surface of the wood (200) has been treated such that the treated wood (200) forms the first surface (221) of the article (290).
52. The article (290) of the Example 51, comprising
   - on the first surface (221), a fourth amount (m4) of the first hydrophobization agent (310) and a fifth amount (m5) of the second hydrophobization agent (320) and the at least partly polymerized second hydrophobization agent (320p) in total;
      preferably,
   - the article 290 comprises on the first surface (221), a fourth amount (m4) of the first hydrophobization agent (310) and a fifth amount (m5) of the second hydrophobization agent (320).
53. The article (290) of the Example 52, wherein
   - a ratio (m4/m5) of the fourth amount (m4) to the fifth amount (m5) is from 0.33 to 20.
54. The article of the Example 52 or 53, wherein
   - a sum (m4+m5) of the fourth amount (m4) and the fifth amount (m5) is from 3 g/m² to 25 g/m² as calculated per square metre of an area of the first surface (221).
55. The article of any of the Examples 52 to 54, wherein
   - the fourth amount (m4) is from 1 g/m² to 15 g/m² as calculated per square metre of an area of the first surface (221),
      preferably
   - the fourth amount (m4) is from 2g/m² to 10 g/m².
56. The article of any of the Examples 52 to 55, wherein
   - the fifth amount (m5) is from 0.25 g/m² to 5 g/m² as calculated per square metre of an area of the first surface (221),
      preferably
   - the fifth amount (m5) is more than 0.5 g/m² and less than 2 g/m².
57. The article of any of the Examples 51 to 56, wherein
   - the first hydrophobization agent (310) is a wax or a wax-like solid having a melting point of at least 40 °C;
      preferably,
   - the first hydrophobization agent (310) comprises alkene ketene dimer (AKD) or the first hydrophobization agent (310) is alkene ketene dimer (AKD).
58. The article of any of the Examples 51 to 57, wherein
   - the first surface (221) is formed of softwood, such as wood belonging to *Picea* family, such as European spruce (i.e. *Picea abies).*
59. The article of any of the Examples 51 to 58, wherein
   - the first surface (221) is a surface of laminated wood (210, 220), such as a surface of plywood (220).
60. The article of any of the Examples 51 to 59, wherein
   - a second surface (222) of the article (290) comprises the first hydrophobization agent (310) and at least one of the second hydrophobization agent (320) and the at least partly polymerized second hydrophobization agent (320p).
61. The article of the Examples 60, wherein
   - the second surface (222) is formed by a veneer layer.
62. The article of any of the Examples 60 to 66, wherein
   - the second surface (222) of is formed of softwood such as wood belonging to *Picea* family, such as European spruce (i.e. *Picea abies).*
63. The article of any of the Examples 51 to 62, comprising
   - a first veneer layer (110) that forms the first surface (112), a normal (N) of the first surface (112) being unidirectional with a direction of a thickness (tp) of first veneer layer (110),
   - a second layer (120, 199), and
   - adhesive (195) between the layers,
      preferably,
   - the second layer is a second veneer layer (120).
64. The article of Example 63, wherein
   - the first veneer layer (110) is made of softwood, such as wood belonging to *Picea* family, such as European spruce (i.e. *Picea abies).*
65. The article of the Example 63 or 64, wherein
   - a thickness (tv) of the first veneer layer (110) is from 1 mm to 4 mm, such as from 1.4 mm to 3.6 mm.
66. The article of any of the Examples 63 to 65, wherein
   - the first veneer layer (110) comprises a first veneer having lathe checks that are indicative of the first veneer having been produced by peeling; preferably,
   - the lathe checks face an interior of the article (290).
67. article of any of the Examples 63 to 66, wherein
   - the second layer is a second veneer layer (120) and
   - a grain direction (119) of a veneer of the first veneer layer (110) forms an angle (α) of at least 60 degrees with a grain direction (129) of a veneer (121) of the second veneer layer (120).
68. The article of any of the Examples 51 to 67, wherein
   - the first surface (221) comprises particles of the first hydrophobization agent (310) and particles of the second hydrophobization agent (320).
69. The article of the Example 68, wherein
   - a size of the particles of the first hydrophobization agent (310) is from 0.1 µm to 2 µm; preferably 0.5 µm to 1 µm; and
   - a size of the particles of the second hydrophobization agent (320) is from 0.1 µm to 2 µm; preferably 0.3 µm to 1 µm.
70. The article of any of the Examples 51 to 69, wherein
   - a roughness of the first surface (221), expressed in Ra value, is 2 µm or higher; preferably 2 µm to 20 µm; more preferably 3 µm to 20 µm.
71. The article of any of the Examples 51 to 70, wherein
   - a roughness of the first surface (221), expressed in Ra value, is 20 µm or lower.
72. The article of any of the Examples 51 to 71, wherein
   - the second hydrophobization agent (320) is one of
      - a resin that is derivable from softwood or from soft wood derivative, such as rosin derived from tall oil,
      - a derivative of a resin that is derivable from softwood or from soft wood derivative, such as rosin derived from tall oil, the derivative of the resin being e.g. fortified, modified or saponified resin, or
      - a mixture thereof.
73. The article of the Example 72, wherein
   - the first surface (221) comprises a mordant (330), and
   - the second hydrophobization agent (320) has been bound to the wood by the mordant (330).
74. The article (290) of any of the Examples 51 or 73, comprising
   - on the first surface (221),
      - a/the fifth amount (m5) of the second hydrophobization agent (320) and the at least partly polymerized second hydrophobization agent (320p) in total and
      - a third amount (m3) of a/the mordant (330), such that
   - a ratio (m3/m5) of the third amount (m3) to the fifth amount (m5) is from 0.1 to 2.
73. The article (290) of the Example 73 or 74, wherein
   - the mordant (330) comprises aluminium (Al) and/or
   - the mordant (330) comprises at least one of a polyethyleneimine, a linear polyamine, and a metal that is capable of forming one or more hydroxides in an aqueous solution.
74. The article (290) of the Example 73, wherein
   - the mordant (330) comprises at least one of aluminium sulphate (Al₂(SO₄)₃), aluminium hydroxide, polyaluminium chloride (PAC), and double sulphate aluminium salt (X^{c}Al(SO₄)₂, wherein X^{c} is a monovalent cation, such as potassium or ammonium).
75. The article of any of the Examples 51 to 74, wherein
   - the first surface (221) is exposed to environment and the treated surface of the wood (200) forms the first surface (221) of the article (290).
76. The article of any of the Examples 51 to 75, wherein
   - a normal of the first surface (221) is perpendicular to a grain direction of the wood (200) forming the first surface (221).
77. The article of any of the Examples 51 to 76, wherein
   - a third surface (223) of the article (290) comprises the first hydrophobization agent (310) and at least one of the second hydrophobization agent (320) and the at least partly polymerized second hydrophobization agent (320p) and
   - the third surface (223) comprises a part having a normal (N3) that forms an angle of 30 to 150 degrees with a normal (N) of the first surface (221); preferably,
   - the third surface (223) comprises mordant (330).
78. The article of the Example 77, wherein
   - a part of the third surface (223) is formed of such wood that a grain direction of the wood forming the part of the third surface (223) forms an angle of at most 60 degrees with a normal (N3) of the third surface (223).
79. The article of the Example 77 or 78, wherein
   - the third surface (223) comprises a tongue and/or a groove.
81. Use of the article (290) of any of the Examples 51 to 75 as a construction panel.
82. Use of the article (290) of any of the Examples 51 to 75 as a construction panel of which first surface (221) is wet.

## Claims

1. A method for treating laminated wood (210, 220), the method comprising
- applying treatment agent (300) comprising first hydrophobization agent (310), second hydrophobization agent (320), and mordant (330) onto a first surface (221) of the laminated wood (210, 220) such that
- a first amount (m1) of the first hydrophobization agent (310) is applied onto the first surface (221) and
- a second amount (m2) of the second hydrophobization agent (320) is applied onto the first surface (221), wherein
- the laminated wood (210, 220) comprises
• a first veneer layer (110) that forms the first surface (221), a normal (N) of the first surface (221) being unidirectional with a direction of a thickness (tp) of first veneer layer (110),
• a second layer, and
• adhesive (190) between the layers,
- the first veneer layer (110) is formed of softwood,
- a thickness (tv) of the first veneer layer (110) is from 1 mm to 4 mm,
- the first hydrophobization agent (310) is alkyl ketene dimer (AKD),
- the second hydrophobization agent (320) is [i] a rosin that is derivable from softwood or soft wood derivative or [ii] a derivative of a rosin that is that is derivable from softwood or soft wood derivative or [iii] a combination thereof,
- the mordant (330) comprises aluminium (Al), and
- a ratio (m1/m2) of the first amount (m1) to the second amount (m2) is from 0.33 to 20.

2. The method of claim 1, wherein
- a sum (m1+m2) of the first amount (m1) and the second amount (m2) is from 3 g/m² to 25 g/m² as calculated per square metre of an area of the first surface (221);
preferably,
- the method comprises applying a third amount (m3) of the mordant (330) onto the first surface (221) of the laminated wood (210, 220), wherein
- a ratio (m3/m2) of the third amount (m3) to the second amount (m2) is from 0.1 to 2.

3. The method of the claim 1 or 2, wherein
- the first amount (m1) is from 1 g/m² to 15 g/m² as calculated per square metre of an area of the first surface (221) and
- the second amount (m2) is from 0.25 g/m² to 5 g/m² as calculated per square metre of an area of the first surface (221).

4. The method of any of the claims 1 to 3, wherein
- the treatment agent (300) is dispersion or an emulsion comprising the first hydrophobization agent (310), the second hydrophobization agent (320), and the mordant (330), and
- a total content of the first hydrophobization agent (310), the second hydrophobization agent (320), and the mordant (330) in the dispersion or emulsion is from 5 wt% to 40 wt%, preferably more than 10 wt% and less than 25 wt%; preferably,
- the treatment agent (300) comprises water.

5. The method of the claim 4, wherein
- a size of the particles of the first hydrophobization agent (310) in the treatment agent (300) is from 0.1 µm to 2 µm; preferably 0.5 µm to 1 µm; and
- a size of the particles of the second hydrophobization agent (320) in the treatment agent (300) is from 0.1 µm to 2 µm; preferably 0.3 µm to 1 µm.

6. The method of any of the claims 1 to 5, comprising
- applying the first hydrophobization agent (310), the second hydrophobization agent (320), and the mordant (330) onto a second surface (222) of the laminated wood (210, 220), wherein
- the second surface (222) is opposite to the first surface (221);
preferably,
- the second surface (222) of the laminated wood (210, 220) is formed by a veneer layer, such as a veneer layer that comprises softwood;
more preferably,
- after applying first hydrophobization agent (310), the second hydrophobization agent (320), and the mordant (330) onto the second surface (222), the second surface (222) is dried and
- after said drying, the first hydrophobization agent (310), the second hydrophobization agent (320), and the mordant (330) are applied onto the first surface (221).

7. The method of any of the claims 1 to 6, comprising
- applying first hydrophobization agent (310), second hydrophobization agent (320), and mordant (330) onto a third surface (223) of the wood (200, 210, 220), wherein
- the third surface (223) comprises a part having a normal (N3) that forms an angle of 30 to 150 degrees with a normal (N) of the first surface (221); preferably,
- a part of the third surface (223) is formed of such wood that a grain direction of the wood forming the part of the third surface (223) forms an angle of at most 60 degrees with a normal (N3) of the third surface (223).

8. The method of any of the claims 1 to 7, comprising
- peeling a log (410) to produce at least one veneer web (411) and
- cutting the veneer web (411) to produce a veneer, wherein
- the first veneer layer (110) comprises the veneer that is cut from the veneer web (411) produced by peeling.

9. The method of any of the claims 1 to 8, comprising
- applying the first hydrophobization agent (310) such that a temperature of the applied first hydrophobization agent (310) is below the melting point of the first hydrophobization agent (310);
preferably the method comprises
- applying the first hydrophobization agent (310), which is AKD, such that a temperature of the applied first hydrophobization agent (310) is below 40 °C.

10. The method of any of the claims 1 to 9, comprising
- applying the first hydrophobization agent (310) and the second hydrophobization agent (320) such that a temperature of the first surface (221) is at least 10 °C when the hydrophobization agents (310, 320) are applied on the first surface (221);
optionally, the method comprises
- heating the first surface (221).

11. An article (290) comprising laminated wood (210, 220), the laminated wood (210, 220) comprising
• a first veneer layer (110) that forms a first surface (221) of the article (290), a normal (N) of the first surface (221) being unidirectional with a direction of a thickness (tp) of first veneer layer (110),
• a second layer, and
• adhesive (190) between the veneer layers, wherein
• the first veneer layer (110) is formed of softwood; the article (290) comprising
- on the first surface (221), mordant (330), a fourth amount (m4) of first hydrophobization agent (310), and a fifth amount (m5) of second hydrophobization agent (320), wherein
- the first hydrophobization agent (310) is alkene ketene dimer (AKD),
- the second hydrophobization agent (320) is
• a rosin that is derivable from softwood or soft wood derivative or
• an at least partly polymerized rosin that is that is derivable from softwood or soft wood derivative or
• a derivative of a rosin that is that is derivable from softwood or soft wood derivative or
• an at least partly polymerized derivative of a rosin that is that is derivable from softwood or soft wood derivative,
- the mordant (330) comprises aluminium,
- a ratio (m4/m5) of the fourth amount to the fifth amount is from 0.33 to 20, and
- the first hydrophobization agent (310), the second hydrophobization agent (320), and the mordant (330) have been applied on the first surface (221) by applying treatment agent (300) onto the first surface (221), wherein the treatment agent (300) comprises the first hydrophobization agent (310), the second hydrophobization agent (320), and the mordant (330).

12. The article (290) of claim 11 wherein,
- a sum (m4+m5) of the fourth amount (m4) and the fifth amount (m5) is from 3 g/m² to 25 g/m² as calculated per square metre of an area of the first surface (221).

13. The article (290) of claim 11 or 12 comprising
- on the first surface (221), a third amount (m3) of the mordant (330), wherein
- a ratio (m3/m5) of the third amount (m3) to the fifth amount (m5) is from 0.1 to 2.

14. The article (290) of claim 12 or 13, wherein
- the fourth amount (m4) is from 1 g/m² to 15 g/m² as calculated per square metre of an area of the first surface (221) and
- the fifth amount (m5) is from 0.25 g/m² to 5 g/m² as calculated per square metre of an area of the first surface (221).

15. The article of any of the claims 11 to 14, comprising
- on a second surface (222) that is opposite to the first surface (221), the first hydrophobization agent (310), the second hydrophobization agent (320), and the mordant (330);
preferably,
- the second surface (222) is formed by a veneer layer.

16. The article of any of the claims 11 to 15, comprising
- on a third surface (223), the first hydrophobization agent (310), the second hydrophobization agent (320), and the mordant (330), wherein
- the third surface (223) comprises a part having a normal (N3) that forms an angle of 30 to 150 degrees with a normal (N) of the first surface (221);
preferably,
- a part of the third surface (223) is formed of such wood that a grain direction of the wood forming the part of the third surface (223) forms an angle of at most 60 degrees with a normal (N3) of the third surface (223).

17. The article of any of the claims 12 to 16, wherein
- the first veneer layer (110) comprises a first veneer having lathe checks that are indicative of the first veneer having been produced by peeling;
preferably,
- the lathe checks face an interior of the article (290).

18. Use of the article (290) of any of the claims 11 to 17 as a construction panel.
